(19) Europäisches Patentamt / European Patent Office / Office européen des brevets

(11) **EP 1 998 144 B1**

(12) **FASCICULE DE BREVET EUROPEEN**

(45) Date de publication et mention
de la délivrance du brevet:
**01.05.2019 Bulletin 2019/18**

(51) Int Cl.:
**G01D 1/04** *(2006.01)* **G01D 5/04** *(2006.01)*
**G06M 1/04** *(2006.01)*

(21) Numéro de dépôt: **08290492.1**

(22) Date de dépôt: **28.05.2008**

(54) **Dispositif de transmission, à un premier élément mobile comportant des dents, d'un mouvement relatif entre un second et un troisième éléments d'un système**

Vorrichtung zur Übertragung einer relativen Bewegung zwischen einem zweiten und einem dritten Element eines Systems an ein erstes bewegliches Element mit Zähnen

Device for transmitting to a first mobile element comprising teeth, a relative movement between second and third elements of a system

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.05.2007 FR 0703754**

(43) Date de publication de la demande:
**03.12.2008 Bulletin 2008/49**

(73) Titulaire: **Etat français représenté par le Délégué Général
pour l'Armement
75509 Paris Cedex 15 (FR)**

(72) Inventeurs:
• **Louvigné. Pierre-François
92330 Sceaux (FR)**
• **Mlnotti, Patrice
25660 Gennes (FR)**
• **Walter, Vincent
25000 Besançon (FR)**
• **Vescovo, Paul
25000 Besançon (FR)**
• **Joseph, Eric
25170 Chaucenne (FR)**
• **Hélin, Philippe
25000 Besançon (FR)**

(56) Documents cités:
**CH-A- 497 725 FR-A- 2 893 139**

**Description**

La présente invention concerne le domaine des microcapteurs et a plus particulièrement pour objet un dispositif de transmission de mouvement du type comportant au moins une poutre d'entraînement d'un élément mobile tel par exemple une roue ou une crémaillère.

Le brevet CH497725 décrit un dispositif pour convertir un mouvement oscillatoire ou alternatif en mouvement rotatif comportant deux poutres d'entraînement d'une roue dentée aptes à se déplacer conjointement mais dans des directions opposées par rapport aux dents de la roue.

On connaît par ailleurs la demande de brevet FR2893139 qui décrit un micro capteur apte à détecter et à compter des événements mécaniques tels des chocs ou des accélérations/décélérations et comportant un support, une masse inertielle reliée au support par des moyens élastiques, des moyens de comptage comportant une roue dentée et des moyens de transmission à cette roue dentée des mouvements relatifs entre le support et la masse inertielle, ces moyens comportant notamment une poutre d'entraînement comportant une dent à l'une de ses extrémités, cette dent étant apte à s'engrener avec celles de la roue dentée, La demanderesse a aussi déposé la demande prioritaire FR0703754 qui décrit notamment un microcapteur apte à détecter une variation de distance ou un cycle de variations de distance entre deux points ou zones d'une structure lors d'une sollicitation et comportant : un support possédant une première et une seconde partie reliées par des moyens élastiques et comportant chacune une zone d'ancrage, ces zones étant aptes à être fixées au niveau des dits deux points ou zones de la structure, des moyens de comptage comportant une roue dentée, des moyens de transmission à cette roue dentée des mouvements relatifs entre les deux parties du support, ces moyens comportant notamment une poutre d'entraînement comportant une dent à l'une de ses extrémités, cette dent étant apte à s'engrener avec celles de la roue dentée. Toutefois, la sensibilité de comptage des chocs ou des variations de distance de ces capteurs est limitée par le pas des dents de la roue dentée de comptage et les technologies MEMS permettent aujourd'hui de graver des roues dentées avec un pas qui ne peut être inférieur à quelques microns. Si le déplacement relatif, de la masse inertiel par rapport au support dans l'un des cas ou des deux parties du support dans l'autre cas, est inférieur à quelques microns, les techniques émergentes de nanolithographie par faisceaux d'électrons peuvent être utilisées. Ces technologies permettent aujourd'hui de structurer des dents dont le pas est inférieur au micron, typiquement quelques centaines de nanomètres.

Toutefois, d'une part ces techniques de nanolithographie sont extrêmement coûteuses et les procédés actuels ne permettent pas une industrialisation viable de rouages présentant des motifs submicrométriques et, d'autre part, si la nanolithographie optique permet de réaliser des très petites dentures, ouvrant ainsi par exemple la voie au captage "direct" de très petits déplacements, cette technique est rapidement limitée par la résistance des matériaux. En effet, une dent nanométrique résiste difficilement aux efforts de transmission sur la roue dentée et la probabilité de cisaillement des dents de la roue dentée lors de son utilisation est forte et provoquerait un arrêt du comptage.

La solution apportée est un dispositif de transmission, à un premier élément mobile comportant des dents, d'un mouvement relatif entre un second et un troisième éléments d'un système aptes à se déplacer ou à être déplacés l'un par rapport à l'autre sous l'effet d'une contrainte, le premier élément mobile étant disposé sur l'un desdits second et troisième éléments et au moins une poutre d'entraînement apte à entraîner le premier élément mobile et étant, d'une part, solidaire de l'autre desdits second et troisième éléments et, d'autre part, apte à entrer en contact avec une dent dudit premier élément mobile, caractérisé en ce que ce dispositif comporte plusieurs poutres d'entraînement.

Par second et un troisième éléments d'un système, il faut entendre par exemple deux parties d'un même support ou deux supports différents, des électrodes pouvant par exemple être associées à ces derniers, le système pouvant notamment être un actionneur ou un capteur.

Un dispositif selon l'invention comporte m poutres d'entraînement comportant, éventuellement, chacune une dent à son extrémité libre et l'écartement E entre deux extrémités libres ou, le cas échéant, entre deux dents de deux poutres successives est égale à :

$$E = I_1.P + I_2.P/m$$

avec

m est le nombre de poutre,
$I_1$ et $I_2$ sont des nombres entiers naturels et :

$I_2 \neq 0$
$I_1 \neq 0$ si $I_2 \leq m$

afin de permettre une indexation en vernier, $l_2 \neq m$.

Selon une autre caractéristique. l'élément mobile comporte une roue dentée et lesdites poutres d'entraînement sont disposées tangentiellement à cette roue dentée.

Selon une autre caractéristique, au moins l'une des poutres d'entraînement comporte une dent à l'une de ses extrémités, cette dent constituant un engrenage avec celles de la roue dentée.

Selon une autre caractéristique, l'élément mobile comporte une crémaillère.

Selon une autre caractéristique, l'élément mobile comporte un ressort à barillet.

Selon une autre caractéristique, lesdits second et un troisième éléments sont constitués soit par les premières et secondes parties d'un support, soit par un premier et un second support.

L'invention concerne aussi :

- un capteur passif et réversible de cycles de températures ou de contraintes mécaniques subis par une structure, ce capteur comportant des moyens de détection et de comptage comportant un dispositif de transmission selon l'invention,
- un actionneur électrique comportant un dispositif de transmission selon l'invention,
- un dispositif récupérateur d'énergie apte à être fixé sur un matériel apte à osciller et comportant un dispositif de transmission selon l'invention.

Dans ce contexte, un dispositif de transmission selon l'invention aussi appelé mécanisme de subdivision dans la suite , confère les avantages suivants:

- Il permet de capter des déplacements largement inférieurs au pas de la roue dentée. Autrement dit, même avec des motifs grossiers réalisés à moindre coût par des technologies conventionnelles, il est permis de capter des déplacements de faible amplitude, typiquement 1 micron ou moins...

- Puisque le pas de la denture est supérieur (voire largement supérieur au déplacement détecté), les dents ne sont pas sujettes à une rupture parasite lors de la transmission des efforts d'entraînement sur le premier élément mobile.

- Naturellement, dans des cas extrêmes, il n'est pas interdit de combiner des motifs nanométriques (pas de denture typiquement de l'ordre du micron ou moins) avec le principe de subdivision. Dans ce cas, le système est coûteux, mais il peut permettre de détecter des déplacements infinitésimaux (typiquement quelques centaines de nanomètres voire moins. Toutefois, dans ce dernier cas, la force exercée sur les dents de l'élément mobile devra être faible afin d'éviter tout risque de cisaillement.

L'invention concerne aussi, un microcapteur, un actionneur ou un dispositif récupérateur d'énergie comportant un dispositif de transmission selon l'invention.

Un microcapteur selon l'invention peut notamment être un microcapteur apte à détecter et, préférentiellement aussi à compter, le nombre de cycles de variations de distance entre deux points ou zones d'une structure soumise à une action extérieure répétée, par exemple des cycles de températures ou de contraintes mécaniques comme par exemple le nombre de passages de véhicules sur un pont, générant un niveau de contrainte connu dans la structure.

Par réversible, il faut entendre un capteur apte à détecter un cycle de variations de distance sans se détériorer, donc apte ensuite à détecter un autre cycle.

Par moyens passifs, il faut comprendre des moyens fonctionnant sans source d'énergie contrairement aux moyens, dits actifs, utilisés dans les demandes de brevets susmentionnées et qui utilisent une source d'énergie, à savoir une alimentation électrique.

Selon une caractéristique avantageuse permettant de compter le nombre de cycles de déformations subies par une structure pendant une durée donnée, un microcapteur selon l'invention comporte des moyens de comptage du nombre de cycles de variation de distance détectés par lesdits moyens passifs et réversibles de détection, ces moyens étant préférentiellement eux-mêmes passifs.

Selon une caractéristique particulière, les moyens de comptage sont constitués par des moyens mécaniques de comptage comportant au moins une première roue dentée.

Selon une caractéristique particulière, cette première roue dentée est disposée sur un premier support ou sur une première partie d'un support et au moins une poutre d'entraînement est solidaire, à l'une de ses extrémités à un deuxième support ou à une deuxième partie dudit support et comporte, à son autre extrémité, au moins une dent apte à s'engrener sur ladite première roue dentée.

Selon une autre caractéristique, un microcapteur selon l'invention comporte un dispositif anti-retour associé à ladite première roue dentée, ce dispositif pouvant par exemple être constitué par une poutre solidaire, à l'une de ses extrémités, du premier support ou de la première partie du support et comportant, à son autre extrémité, au moins une dent apte à s'engrener sur ladite première roue dentée ou en des lames coopérant avec une surface périphérique interne de la première roue dentée.

Selon une autre caractéristique le dispositif anti-retour comporte une dent apte à s'engrener sur ladite première roue dentée, cette dent ainsi que celle de la poutre d'entraînement et celles de ladite roue dentée comportant chacune une surface radiale et une surface inclinée reliant l'extrémités de la surface radiale de cette dent à la base de la surface radiale de la dent suivante.

Selon une caractéristique particulière, un microcapteur passif de détection et de comptage comporte un support, principalement en forme de U comportant ainsi une première partie et une deuxième partie reliées par une troisième partie constituant la base du U, et des moyens de comptage disposés sur le support et comportant au moins une première roue dentée disposée sur l'une des première ou deuxième parties et, d'une part, une poutre d'entraînement de cette roue dentée fixée, à l'une de ses extrémités, à l'autre des première ou deuxième parties et comportant, à son autre extrémité, une dent apte à constituer un engrenage avec les dents de la première roue dentée, et d'autre part, un dispositif anti-retour de la première roue dentée et de telle sorte que le rapprochement des première et seconde parties produit un entraînement de la roue dentée par la dent de la poutre d'entraînement tandis que l'éloignement de ces deux parties produit un maintien de la roue dentée par le dispositif anti-retour et un escamotage de la dent de la poutre d'entraînement sur une dent de la première roue dentée.

Selon une autre caractéristique, un microcapteur selon l'invention comporte des moyens aptes à limiter le déplacement de la poutre d'entraînement, par exemple constitués par des butées.

D'autres avantages et caractéristiques de l'invention apparaîtront dans la description de plusieurs variantes de réalisation de l'invention et au regard des figures annexées parmi lesquelles :

- la figure 1 présente un schéma de l'une des deux faces principales du support d'un microcapteur,
- la figure 2 montre un schéma de l'autre face principale du support dudit microcapteur ainsi que des moyens de comptage
- la figure 3 présente un schéma simplifié d'une coupe selon le plan AA' de la figure 1,
- la figure 4 montre un schéma de principe simplifié de moyens de comptage utile à la compréhension de l'invention
- La figure 5 présente les déformations subies par un tel capteur lorsque la structure, sur laquelle il est fixé, est soumise à une sollicitation,
- La figure 6 montre un dispositif de transmission à une roue dentée du mouvement relatif entre deux parties d'un support d'un capteur selon un mode de réalisation de l'invention,
- La figure 7 présente un schéma explicitant le mode de fonctionnement de ce mode de réalisation de l'invention,
- la figure 8 présente un schéma de l'une des deux faces principales du support d'un microcapteur selon une deuxième variante de réalisation de l'invention,
- la figure 9 montre un schéma de l'autre face principale du support d'un microcapteur ainsi que des moyens de comptage selon cette variante de réalisation,
- la figure 10 présente un schéma simplifié d'une partie des moyens de comptage et d'un dispositif anti-retour et comportant notamment une première roue de comptage,
- la figure 11 montre un schéma du support selon la figure 2 mais sans les moyens de comptage,
- La figure 12 présente un schéma de la partie intermédiaire de la poutre d'entraînement,
- la figure 13 montre un schéma d'une seconde roue de comptage des moyens de comptage,
- La figure 14 présente un schéma des moyens de numérotation d'une première roue de comptage dans le cadre de cette variante de réalisation,
Les figures 15a et 15b montrent un schéma des moyens de numérotation d'une seconde roue de comptage dans le cadre de cette variante de réalisation,
La figure 16 présente un exemple de positionnement d'un microcapteur selon cette variante de réalisation sur une structure apte à fléchir,
Les figures 17a et 17b présentent le principe de fonctionnement du microcapteur selon l'invention,
Les figures 18a à 18e montrent des schémas de différents positionnements successifs des dents d'entraînement et anti-retour par rapport à celles de la première roue de comptage lors de la détection du passage d'un véhicule sur la structure fléchie,
la figure 19 présente un schéma de l'une des deux faces principales du support d'un microcapteur selon une quatrième variante de réalisation de l'invention,
la figure 20 présente les moyens de détection et de comptage selon cette variante de réalisation de l'invention,
la figure 21 présente les moyens de comptage selon cette variante de réalisation de l'invention,
La figure 22 montre une variante de réalisation d'une partie d'un microcapteur selon la figure 19.
La figure 23 présentent un schéma d'un actionneur selon un premier mode de réalisation et comportant un dispositif de transmission de mouvement selon l'invention
La figure 24 montre un schéma d'un actionneur selon un second mode de réalisation et comportant un dispositif de transmission de mouvement selon l'invention

La figure 25 montre un schéma d'un dispositif de récupération d'énergie mettant en oeuvre un dispositif selon l'invention.

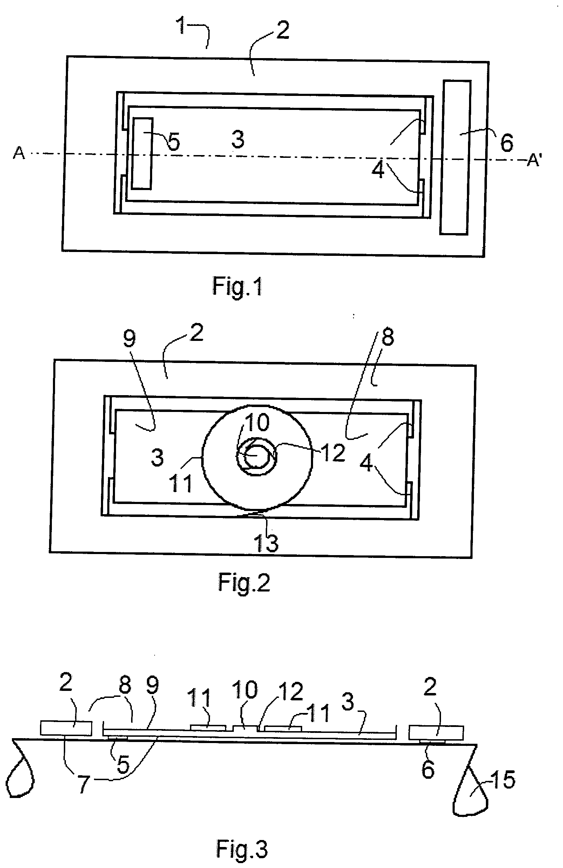

Les figures 1 à 5 montrent un capteur selon un mode de réalisation d'un dispositif représentant un élément de l'état de la technique utile à la compréhension de l'invention et, respectivement, la face inférieure 7, la face supérieure 8 et une vue selon la coupe AA' de la figure 1.

Ce capteur 1 comporte un premier support 2 en forme de cadre et sur lequel est fixé un premier plot 6 destiné à être fixé sur une structure 15 soumise à des cycles de déformations notamment en traction, en compression ou en flexion par exemple dues à une sollicitation mécanique et/ou thermique.

Ce capteur comporte aussi un second support 3, aussi appelé navette dans la suite, de forme rectangulaire et de dimensions plus faibles que l'intérieur dudit cadre 2. Le premier et le second support 2, 3 sont solidarisés l'un à l'autre par quatre ressorts 4 disposés dans l'espace libre entre ces deux supports 2, 3 et au niveau de chacun des quatre coins du second support 3. Ce second support 3 comporte aussi un second plot 5 disposé, dans cet exemple de réalisation, du côté opposé au montant du cadre 2 qui supporte le premier plot 6 et destiné lui aussi à être fixé sur ladite structure 15.

Les plots 5 et 6 constituent donc des zones d'ancrage du capteur 1 sur la structure 15 à surveiller. La surface interne 14 du cadre 2 constitue une butée pour la navette 3.

Comme, montré sur les figures 2 et 3, le second support 3 comporte, sur sa surface supérieure, un moyeu 10 cylindrique solidaire de trois lames 12 disposées tangentiellement au moyeu 10 et autour desquelles est placée une roue dentée 11.

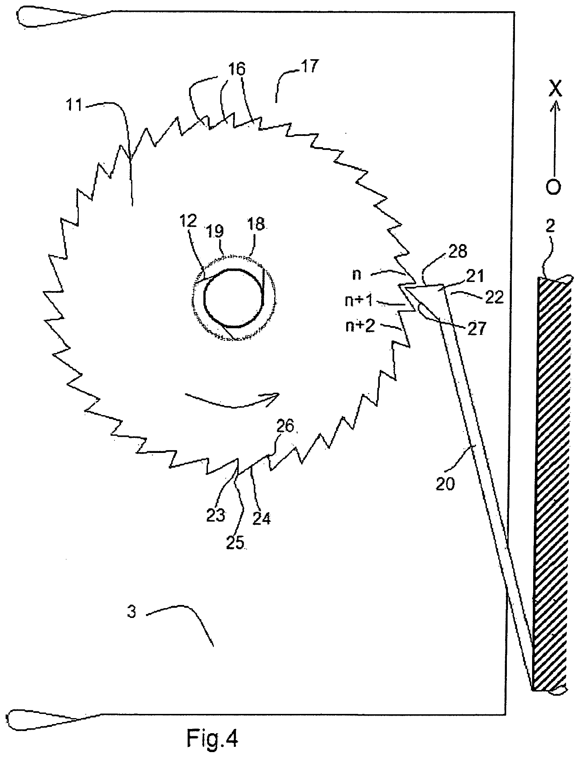

Comme montré sur la figure 4, cette roue dentée 11 comporte des dents 16 sur sa surface périphérique externe 17 et une surface périphérique interne 19, préférentiellement rugueuse destinée à coopérer avec lesdites lames 12 pour former un dispositif anti-retour de la roue dentée 11.

Les moyens de transmission à la roue dentée 11 du mouvement relatif entre les deux parties 2 et 3 du support S comportent au moins deux poutres d'entraînement 20, dont seulement une est représentée pour une question de clarté et pour illustrer plus simplement le principe de comptage, la taille réelle des dents de la roue dentée et de la poutre d'entraînement pouvant être plus de mille fois inférieure à celle des dents représentées. Chacune de ces poutres 20 est solidaire du premier support 2 et comporte une dent 21 au niveau de son extrémité libre 22, cette dent 21 étant apte à former un engrenage, de type cliquet, avec celles de ladite roue dentée 11.

Sur cette figure, la direction OX indique la direction des déplacements relatifs de la première partie 2 du support par rapport à la seconde partie 3 aptes à être comptés par les moyens de comptage tandis que la flèche indique le sens normal de rotation de la roue 11 de comptage. Selon cette direction, chacune des dents 16 de cette première roue dentée 11 comporte une première surface radiale 23 et une surface inclinée 24 reliant l'extrémité supérieure 25 de ladite première surface radiale à la base 26 de la surface radiale de la dent suivante. Selon cette même direction, la dent 21 solidaire de la poutre d'entraînement 20 comporte une surface inclinée 27 et une surface radiale 28, cette dernière se trouvant en vis-à-vis avec ladite première surface radiale 23 d'une dent 16 de la première roue 11 de comptage.

Ainsi la dent 21 de la poutre d'entraînement présente une face d'entraînement qui vient en contact avec la dent de la roue de comptage pour tracter cette roue lors d'un déplacement dans un sens de l'élément entraînant et une face de guidage autorisant le glissement, et donc l'escamotage, de l'élément entraînant sur la dent de la roue de comptage lors d'un déplacement dans le sens opposé au précédent de l'élément entraînant.

La poutre d'entraînement présente une élasticité suffisante pour permettre l'escamotage d'une dent 16 sans détérioration.

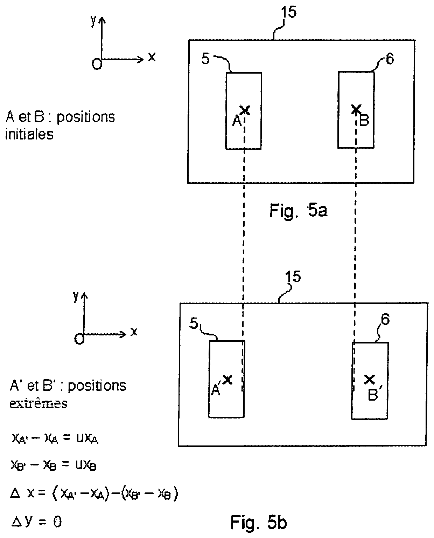

Comme montré sur la figure 5, lorsqu'un tel capteur est fixé, par ses deux plots 5 et 6, sur une structure 15 soumise à une sollicitation produisant une déformation, par exemple une élongation seulement dans la direction Ox, cette déformation de la structure va engendrer une variation de l'écartement entre les plots 5 et 6 donc de leurs centres respectifs. Soient A et B les centres respectifs des plots 5 et 6 dans leur position initiale ou normale et $x_A$ et $x_B$ leurs coordonnées selon l'axe Ox. Lorsque la structure 15 est soumise à une sollicitation, l'écartement entre les plots varie et les points A et B se retrouvent dans les positions extrêmes A' et B', leurs coordonnées étant alors $x_{A'}$ et $x_{B'}$ tandis que les plots reviennent dans leur position initiale, voire légèrement différente, à la fin de la sollicitation ou un certain temps après.

La différence de coordonnées entre la position initiale et la position extrême est donnée par l'expression suivante :

$$\Delta x = (x_{A'} - x_A) - (x_{B'} - x_B)$$

$$\Delta y = 0 \text{ d'après l'hypothèse susmentionnée.}$$

Cette différence d'écartement entre les plots 5 et 6 entraîne une variation de positionnement entre le premier et le second support, respectivement 2 et 3. Comme la roue dentée 11 est solidaire du second support 3 et que la poutre d'entraînement 20, dont la dent 21 est engrenée sur la roue dentée 11, est solidaire du premier support 2, ladite variation de positionnement produit un entraînement de la roue dentée 11 par la poutre d'entraînement 20 dans le sens de la flèche. Comme, dans cet exemple de réalisation, le déplacement relatif de la dent 21 de la poutre d'entraînement 20 par rapport au deuxième support 3 est de l'ordre de grandeur du pas des dents 16 de la roue dentée 11, à savoir, une fois et demi plus grand, la roue dentée 11 va être entraînée en rotation par la dent 21 de la poutre d'entraînement 20, les faces radiales respectives 23 et 28 de la dent n de la roue dentée 11 et de la dent 21 de la poutre d'entraînement 20 étant en contact. A la fin de la sollicitation, ou un certain temps après, les plots, et donc les supports correspondant reviendront dans leur position initiale mais le dispositif anti-retour, constitué des lames 12 et des secondes dents 18 de la roue dentée 11, empêche la roue dentée 11 de tourner dans le sens opposé à celui de la flèche tandis que, de part son élasticité, la face inclinée 27 de la dent 21 de la poutre d'entraînement glisse sur celle de la dent n+1 de la roue dentée 11 avec laquelle elle est en contact jusqu'à dépasser le sommet 25 de cette dent, la face radiale 28 de la dent 21 de la poutre d'entraînement se trouvant alors en regard de la face radiale 23 de la dent n+1 de la roue dentée 11.

A l'issue de ce cycle, les plots 5 et 6 sont revenus à leur position initiale tandis que la roue dentée 11 a tourné d'un pas de ses dents 16 dans le sens de la flèche.

En résumé, l'éloignement des plots 5 et 6, suite à une sollicitation, produit un entraînement de la roue dentée 11 par la dent d'entraînement 21 de la poutre d'entraînement 20 tandis que le rapprochement de ces deux parties, à la fin de la sollicitation, produit un maintien de la première roue dentée 11 par le dispositif anti-retour 12, 19 et un escamotage de la dent 21 de la poutre d'entraînement 20 sur une dent 16 de la première roue dentée 11.

Ainsi, la détection par le microcapteur d'un cycle de variations de distance se traduit par une rotation de la roue dentée 11, des repères associés à cette roue permettant ensuite de déterminer le nombre de cycles subis par la structure depuis une origine, où entre deux temps donnés.

Par ailleurs, il ressort de ce qui précède que pour permettre le comptage du nombre de cycles de déformations subis par une structure, il est nécessaire d'avoir une distance L entre les plots déterminée avec précision. C'est pour cette raison qu'il est nécessaire d'avoir des zones d'ancrage de faible dimension dans la direction OX de détection des déformations. Ceci est assuré par la présence des plots 5 et 6 qui permettent un collage de faible épaisseur e dans la direction OX et de hauteur h plus importante selon la direction Y perpendiculaire à OX, la faible épaisseur des plots 5 et 6 permettant de déterminer la dite distance L avec précision tandis que la hauteur h est suffisante pour permettre une bonne résistance du collage du microcapteur sur la structure.

Pour permettre un résultat similaire par collage, les plots peuvent aussi être remplacés par des encoches ou par des alésages.

En l'absence de zone d'ancrage constituées par des plots, des encoches ou des alésages, lors du placage du microcapteur sur la structure, les plots de colle s'étaleraient de façon aléatoire et la longueur L entre les deux zones d'ancrage pourrait prendre n'importe quelle valeur. Il ne serait donc pas possible de prévoir le fonctionnement du microcapteur pour le comptage des cycles de variations de distance entre deux points A et B d'une structure.

Par ailleurs d'autres modes de fixation que le collage peuvent être envisagés tels que la fixation du microcapteur sur la structure par vis ou par goupille. Pour cela chacun des plots est remplacé par au moins un alésage et préférablement deux alésages positionnés de sorte que leur diamètre d soit très inférieure à la distance D séparant leur axe, par exemple d/D<0,2.

Il ressort de ce qui précède que la réalisation de plots, d'encoches ou d'alésage comme zone d'ancrage permet de connaître avec précision la distance L séparant les zones d'ancrage et donc de permettre le comptage des cycles de variations de distance entre deux points A et B d'une structure. Connaissant les caractéristiques de la déformation de la structure, et compte tenu du pas P des dents de la roue de comptage et du nombre m de poutres d'entraînement, on détermine la distance L entre les points d'ancrage de sorte que lors de la déformation de la structure, la variation de distance entre les zones d'ancrage 5 et 6 soit supérieure au rapport P/m et préférentiellement voisine ou égale à 1,5. P/m.

Selon l'invention le mécanisme de subdivision du pas, via l'utilisation d'un dispositif de transmission à une roue dentée d'un mouvement relatif entre une première et une seconde partie d'un support d'un microcapteur aptes à se déplacer ou à être déplacés l'un par rapport à l'autre sous l'effet d'une contrainte, le premier élément mobile étant solidaire de l'une des dites première et seconde parties et plusieurs poutres d'entraînement, solidaires de l'autre des dites première et seconde parties et comportant chacune une dent à l'une de ses extrémités apte à constituer un engrenage avec celles de l'élément mobile, est présenté dans !e cadre d'un second mode de réalisation d'un capteur 30 selon l'invention.

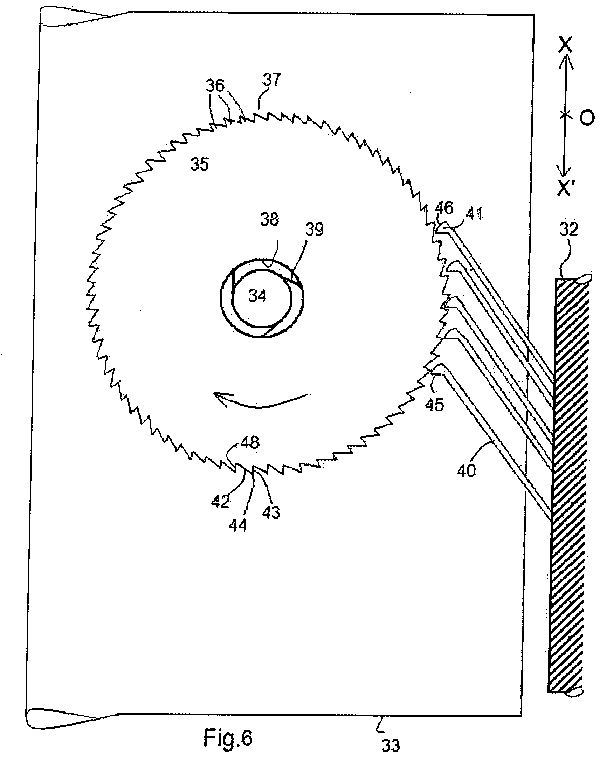

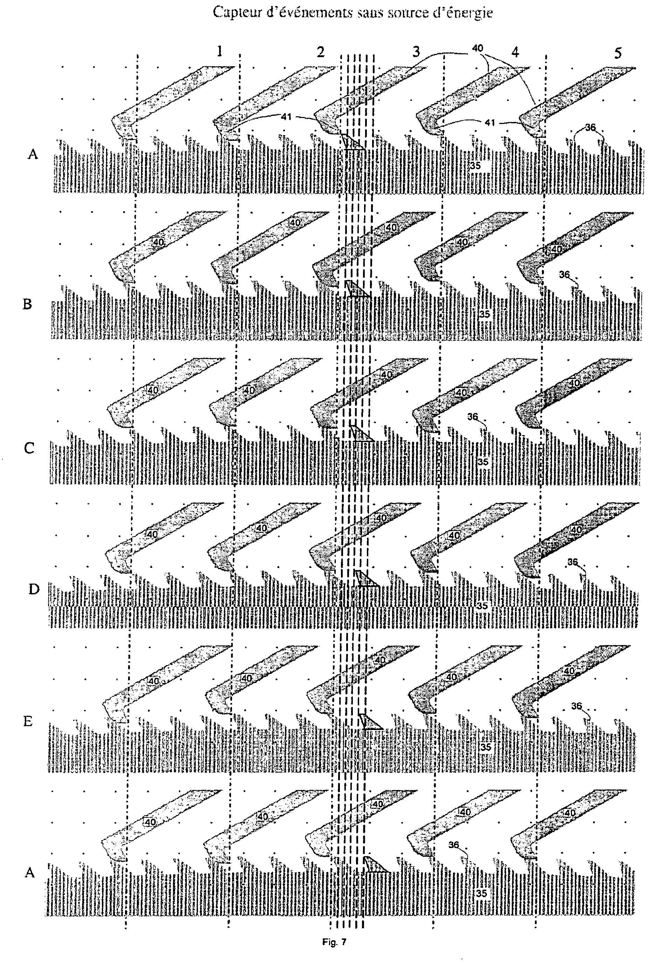

Ce mécanisme est particulièrement utile pour détecter et compter des mouvements relatifs très petit entre lesdites parties par exemple des déplacements submicroniques, ce qui peut notamment être le cas lors de déplacements relatifs mis en jeu dans des phénomènes de compression mécanique ou de dilatation thermique. Il permet notamment de pouvoir détecter et compter des déplacements relatifs entre les première et seconde parties du support inférieur au pas P de la denture de la roue dentée. Ce principe permet d'une part d'accroître la sensibilité du capteur puisqu'il permet d'accéder à des niveaux de sensibilité plus grands que la périodicité des motifs géométriques à laquelle la technologie de fabrication permet d'arriver et d'autre part l'utilisation de techniques moins sophistiquées pour la réalisation du composant donc se traduire par un coût de fabrication inférieur et par une meilleure robustesse du capteur. Les figures 6 et 7 présentent, plus particulièrement, un moyen de comptage comportant des moyens de transmission comportant 4 poutres permettant une subdivision du pas par 5.

Comme montré sur la figure 6, un capteur 31 selon ce second mode de réalisation de l'invention comporte un premier support 32 et un second support 33, ce dernier possédant un moyeu 34 cylindrique solidaire de trois lames 39 disposées tangentiellement au moyeu 34 et autour desquelles est placée une roue dentée 35.

Cette roue dentée 35 comporte des dents 36 sur sa surface périphérique externe 37 et une surface périphérique interne 38 de forme cylindrique.

Cinq poutres d'entraînement 40, solidaires du premier support 32 et disposées sensiblement parallèlement les unes par rapport aux autres comportent, chacune une dent 41 au niveau de leur extrémité libre 42, ces dents 41 étant disposées entre-elles à une distance multiple du pas P de la denture de la roue plus une fraction de ce pas, à savoir un cinquième de ce pas de sorte que l'une seulement de ces dents constitue un engrenage avec des dents 36 de ladite roue dentée 35. D'une manière générale, l'écartement entre deux dents successives des poutres 40 sera :

$$E = l_1 . P + l_2 . P/m$$

où,

m est le nombre de poutres,
$l_1$ et $l_2$ sont des nombres entiers
P est le pas des dents 36 de la roue 35.
$l_1$ et $l_2$ sont des nombres entiers naturels et :

$l_2 \neq 0$
$l_1 \neq 0$ si $_2 \leq m$

Et préférentiellement $l_2 \neq m$ afin de permettre une indexation en vernier.

Sur cette figure, la direction OX', opposée à OX, indique la direction des mouvements ou déplacements relatifs de la première partie 32 du support par rapport à la seconde partie 33 aptes à être comptés par les moyens de comptage tandis que la flèche indique le sens normal de rotation de la roue 35 de comptage. Selon cette direction, chacune des dents 36 de cette première roue dentée 11 comporte une première surface radiale 43 et une surface inclinée 42 reliant l'extrémité supérieure 44 de ladite première surface radiale à la base 48 de la surface radiale 43 de la dent suivante. Selon cette même direction, chacune des dents 41 solidaires de la poutre d'entraînement 40 comporte une surface inclinée 46 et une surface radiale 45, cette dernière se trouvant, pour l'une des dents 41, en vis-à-vis à face avec ladite première surface radiale 43 d'une dent 36 de la première roue 35 de comptage.

Les poutres d'entraînement 40 présentent une élasticité suffisante pour permettre l'escamotage de leur dent 41 sur une dent 36 de la première roue 35 de comptage, et ce, sans détérioration.

La surface périphérique interne 38 de la roue dentée 35 et l'extrémité des dites lames 39 sont destinées à coopérer pour former un moyen d'accommodation élastique de la roue dentée 35 sur le moyeu 34, la force de frottement de l'extrémité des lames 39 sur la surface périphérique interne 38 de la roue 35 étant, d'une part, supérieure à celle que peuvent engendrer les poutres d'entraînement lorsqu'elles sont dirigées dans une première direction OX, entraînant alors un glissement des dents 41 des poutres 40 sur la roue 35 et, d'autre part, inférieure à celle que peuvent engendrer les poutres d'entraînement lorsqu'elles sont dans une seconde direction OX', opposée à ladite direction OX, entraînant alors un glissement de la surface périphérique interne 38 de la roue 35 sur les extrémités des lames 39. Le glissement de la roue sur les extrémités des lames 39 est autorisé par un dimensionnement correct du moyen d'accommodation élastique du couple résistant par rapport au cisaillement possible de la dent 41 de la poutre 40 ou de celle, 36, de la roue dentée 35.

La figure 7 présente un schéma du fonctionnement des moyens de comptage constitués par les poutres, la roue dentée 35, le moyeu 34 et le moyen d'accommodation élastique du couple résistant et pour lequel la seconde partie 33 du support S1 est supposée, dans cet exemple, se déplacer par rapport à la première partie 32 du support S1 selon la direction OX'.

Les différentes phases sont respectivement numérotées de 1 à 5 et de A à E.

Dans la phase A, la roue dentée 35 s'est déplacée par rapport aux poutres 40 fixes. La poutre 3 franchit la dent représentée en sombre de la roue dentée 35, et de part la configuration géométrique des dentures, interdit le retour de la dent, les poutres 40 étant représentées sur ce premier schéma juste avant le passage de la dent pour bien identifier les séquences, au lieu de les représenter après le franchissement. Les poutres 4 et 5 sont mises en flexion par la denture. Les poutres 1 et 2 seront également mises en flexion lors du prochain déplacement relatif de la roue.

L'application du cycle de chargement suivant de la phase B provoque, un deuxième déplacement relatif de la première roue par rapport aux poutres fixes. Cette fois ci, c'est la poutre 4 qui se retrouve à passer une autre dent de la roue dentée 35 et à interdire le retour de cette roue en un autre point de la denture de la roue que celui de la phase A.

De même, lors de la phase C, la poutre 5 vient de franchir la denture de la roue et interdit son retour en autre endroit que celui de la phase B. Il en est de même des phases D et E.

Lors de la prochaine phase A, la poutre 3 franchit de nouveau une dent de la roue dentée. Cette dent est celle qui est consécutive à celle représentée en sombre sur tous les schémas. Par conséquent, les cinq cycles de sollicitation se sont traduits au niveau de la première roue par l'engrènement d'une dent, illustrant le principe de subdivision du pas, donc la possibilité de détecter et d'enregistrer une information avec une résolution supérieure à celle intrinsèque du système.

Un tel dispositif permet de détecter et de compter des cycles de variations de distance inférieures à $5\mu$m. En augmentant le nombre de poutres, des variations de distances inférieures à $1\mu$m peuvent être détectées et comptées.

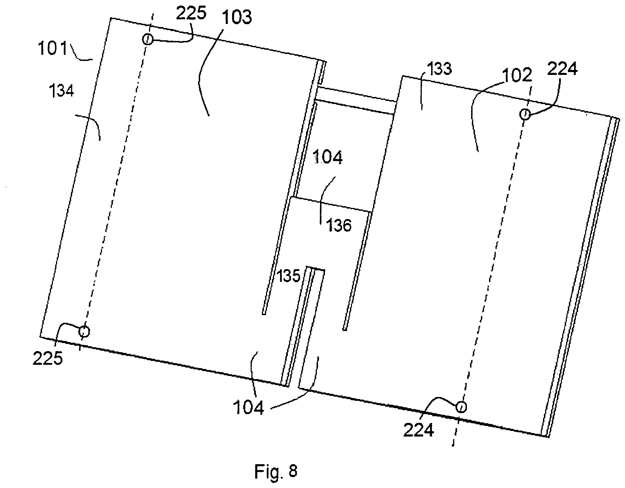

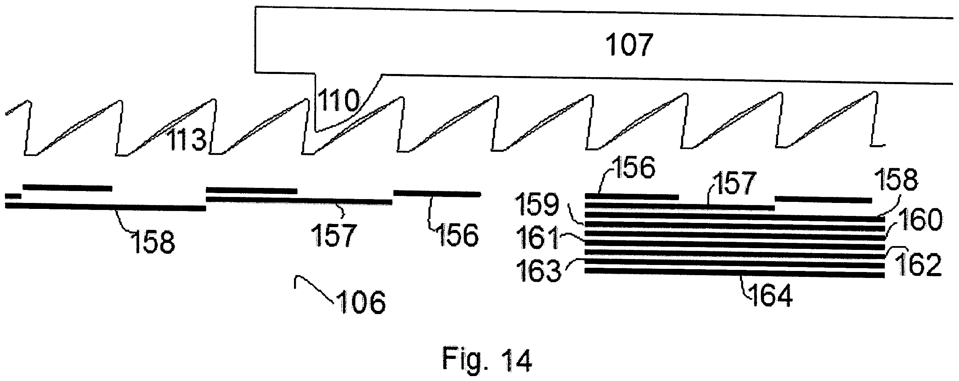

Les figures 8 à 18 montrent des schémas d'une troisième variante de réalisation de l'invention appliquée au comptage du nombre de passage de véhicules sur une structure, telle par exemple un pont.

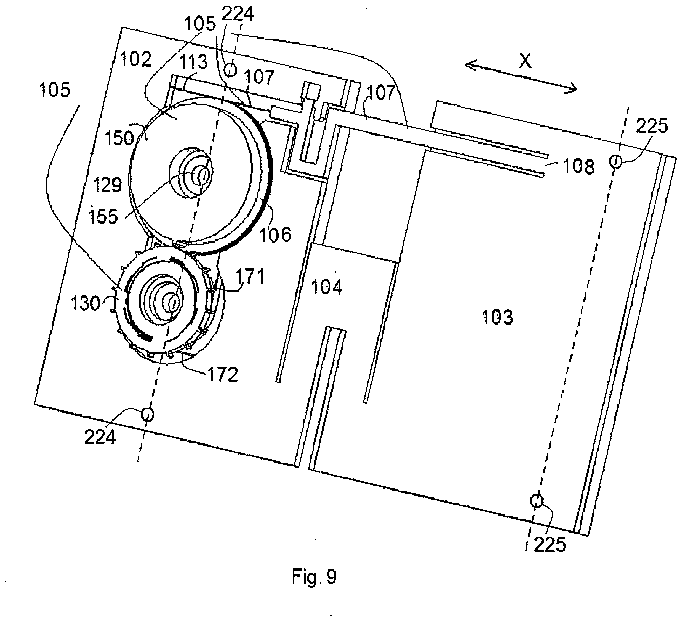

Les figures 8 et 9 présentent l'une et l'autre des deux faces principales du capteur selon cette troisième variante de réalisation de l'invention.

Selon ce mode de réalisation, un microcapteur passif de détection et de comptage du nombre de passage de véhicules comprend un support 101, principalement en forme de U comportant ainsi une première partie 102 et une deuxième partie 103 reliées entre-elles par une troisième partie 104 constituant la base du U, et des moyens de comptage 105 disposés sur le support et comportant au moins une première roue dentée 106 disposée sur ladite première partie 102 du support 101 et, d'une part, quatre poutres d'entraînement 107 de cette première roue dentée 106 fixées, à l'une, 108, de leurs extrémités 108, 109, à un tronçon 107' solidaire de ladite deuxième partie 103 et comportant chacune, à leur autre extrémité 109, une dent 110, montrée sur la figure simplifiée 10 ne présentant qu'une seule poutre d'entraînement, et apte à constituer un engrenage 111 avec les dents 112 de la première roue dentée 106, et d'autre part, un dispositif anti-retour 113 de la première roue dentée 106 et de telle sorte que le rapprochement des première et seconde parties 102, 103 du support 101 produit un entraînement de la roue dentée 106 par la dent d'entraînement 110 de la poutre d'entraînement 107 tandis que l'éloignement de ces deux parties produit un maintien de la première roue dentée 106 par le dispositif anti-retour 113 et un escamotage de la dent 110 de la poutre d'entraînement sur une dent 112 de la première roue dentée.

Comme montré sur la figure 8, les premières et secondes parties comportent des premières et secondes zones d'ancrage, respectivement 224 et 225, constituées par des alésages dans chacun desquels peut être inséré une vis en vue de la fixation du microcapteur sur la structure à analyser telle par exemple que le parapet d'un pont. Les alésages 224, 225 ont un diamètre légèrement supérieur à celui desdits vis.

Dans cet exemple de réalisation, les premières et secondes zones d'ancrage 224, 225 sont disposées respectivement selon un premier axe Y1 et un second axe Y2 parallèles entre eux et séparés par une distance L

Comme montré sur la figure 9, les faces 133, 134 et 135 des parties respectives 102, 103 et 104 du support 101 sont planes et disposées dans un même plan et destinées à être plaquées contre la structure à analyser via lesdits vis.

Dans cet exemple de réalisation la troisième partie 104 du support a elle-même une forme de U inversé avec une base 136 épaisse. Cette forme permet d'avoir des sections plus petites au niveau des branches du U de cette poutre que de la base 136 et dans le cas où une force importante était exercée au niveau de cette troisième partie une cassure surviendrait au niveau de l'une des branches et donc dans une direction parallèle à celle du déplacement normal des premières et secondes parties, ce qui permet d'éviter tout déplacement relatif entre ces parties dans la direction normale du déplacement et d'éviter un éventuel décalage entre la roue dentée 106 et la dent 110 de la poutre d'entraînement 107.

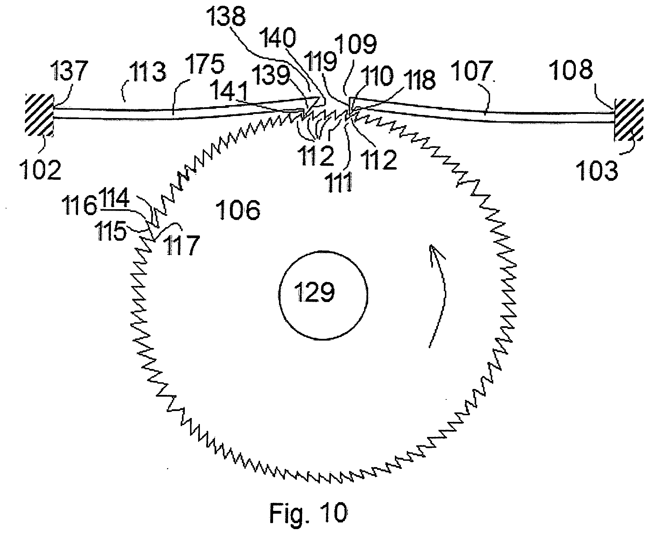

La figure 10 montre un schéma simplifié des moyens de comptage et du dispositif anti-retour. Ainsi, sont représentés :

- la première roue dentée 106 disposée sur l'axe 129,
- la poutre d'entraînement 107 solidaire de la deuxième partie 103 du support 101 et comportant une dent 110 apte à constituer un engrenage 111 avec celles 112, de la première roue dentée 106,
- un dispositif anti-retour 113 de la première roue dentée 106 constituée par une poutre 175 solidaire par l'une de ses extrémités 137 de la première partie 102 du support 101 et comportant, à son autre extrémité 138 une dent 139 apte à constituer un engrenage avec celles, 112, de la première roue dentée 106. La flèche indiquant le sens normal de rotation de la première roue dentée de comptage 106, la dent 139 du dispositif anti-retour comporte, selon cette direction, une surface inclinée 140 et une surface radiale 141, la surface radiale 140 se trouvant en face à face avec une surface radiale d'une dent 112 de la première roue dentée 106.

Comme montré sur cette figure, la poutre d'entraînement 107 et celle, 175, du dispositif anti-retour sont mises en précontrainte en flexion sur la roue dentée 106 de par leur positionnement. En effet l'extrémité des dents n'est pas tangentielle à la base des dents de la première roue dentée 106 mais tangentielle à une position située plus proche de l'axe de cette roue, Comme ces poutres ne peuvent aller au-delà de ladite base, elles sont automatiquement soumises à ladite précontrainte exercée par la première roue dentée 106.

Par ailleurs, la figure 10 la flèche indique le sens normal de rotation de la roue 106 de comptage. La roue dentée 106 tourne autour d'un axe 129 solidaire de la première partie 102 du support 101 tandis que la poutre d'entraînement 107 est solidaire de la deuxième partie 103 du support 101. Selon cette direction, chacune des dent 112 de cette première roue dentée 106 comporte une première surface radiale 114 et une surface inclinée 115 reliant l'extrémité supérieure 116 de ladite première surface radiale à la base 117 de la surface radiale de la dent suivante. Selon cette même direction, la dent 110 solidaire de la poutre d'entraînement 109 comporte une surface inclinée 118 et une surface radiale 119, cette dernière se trouvant en face à face avec ladite première surface radiale 114 d'une dent 112 de la première roue 106 de comptage.

Cette première roue dentée 106 comporte 512 dents soit $2^9$.

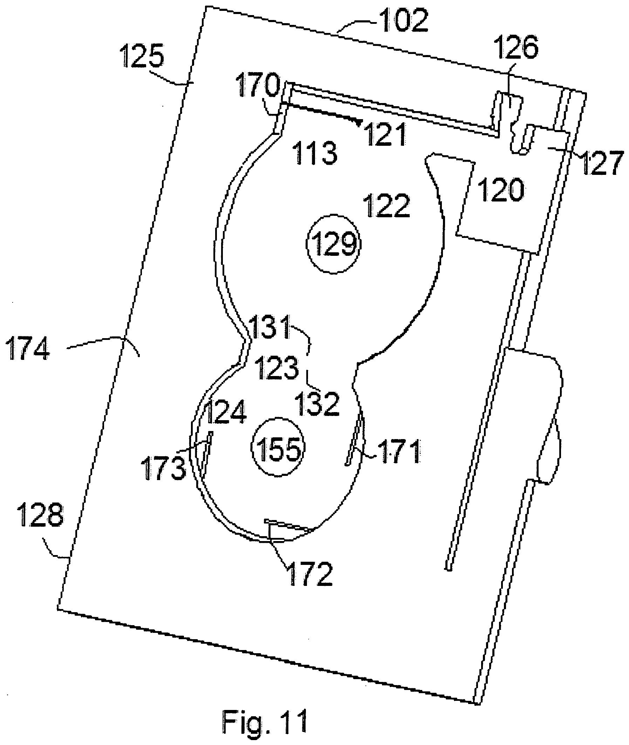

La figure 11 montre l'une des deux faces principales de la première partie 102 du support apte à recevoir une partie des moyens de comptage 105. Cette surface 174 comporte plusieurs gravures successives 120, 121, 122, 123 et 124 comportant certaines parties communes.

La première gravure 120 est disposée dans la partie supérieure 125 de la première partie et du côté de la première partie 102 du support. Elle a la forme d'un U à base épaisse et l'une des branches 126 est plus longue que l'autre 127.

La seconde gravure 121 est de forme rectangulaire allongée et disposée dans la continuité de la première et en direction du côté opposé à la troisième partie 104 du support 101. Toutefois, cette gravure n'est pas complète car il reste un dispositif anti-retour 113 disposé longitudinalement sur moins de la moitié de la longueur de la gravure et fixé à la première partie 102 du support 101 par son extrémité située au niveau du côté transversal 170 de la gravure qui est à l'opposé de la première gravure 120.

La troisième gravure 122 est de forme cylindrique et disposée dans la continuité de la seconde et en dessous, c'est-à-dire en direction de la partie basse 128 de la première partie 102 du support 101. Toutefois, la gravure n'est pas complète car il reste une partie centrale cylindrique 129. Cette gravure 122 est destinée à recevoir la première roue de comptage 106 et son diamètre est légèrement supérieur à celui de cette dernière. De plus, la première roue de comptage 106 comporte un alésage central et la partie centrale cylindrique 129 constitue un axe pour cette première roue dentée 106.

La quatrième gravure 123 est de forme rectangulaire et comporte une partie inférieure 31 de la troisième gravure 122 et une partie supérieure 132 de la cinquième gravure 124.

La cinquième gravure 124 est de forme cylindrique de diamètre légèrement inférieur à celui de la troisième gravure 122 et disposée tangentiellement à cette dernière et dans la direction de la partie inférieure 128 de cette première partie 123 du support. Cette gravure 124 est destinée à recevoir une seconde roue dentée de comptage 130 et n'est pas complète car il reste d'une part une partie centrale cylindrique destinée à servir d'axe de rotation 155 à la seconde roue dentée de comptage 130 et d'autre part trois poutres 171, 172 et 173 disposées respectivement à $\pi/2$ Rd et aptes à maintenir en position et à servir de dispositif anti-retour à la seconde roue dentée 30. Cette dernière comporte 16 dents soit $2^4$.

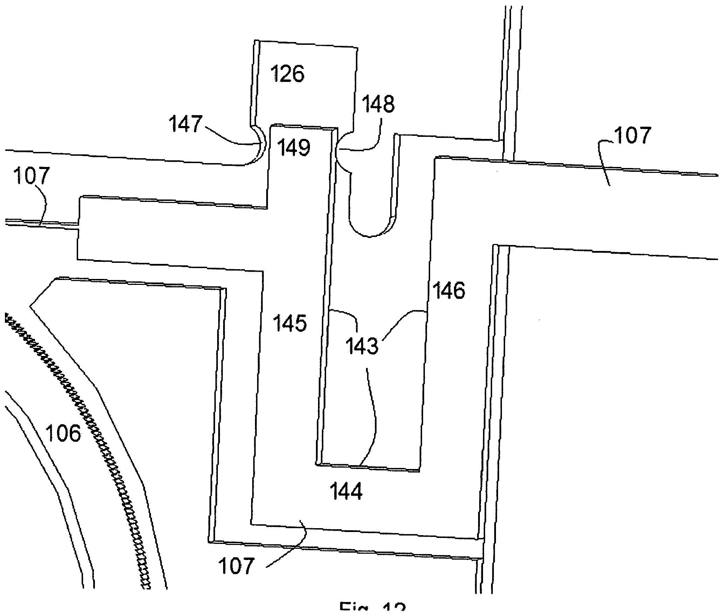

La figure 12 présente un détail de la partie intermédiaire 143 du tronçon 107' reliant les quatre poutres d'entraînement 107 à la deuxième partie 103 et qui se trouve au niveau de la première gravure 120 de la première partie du support 101.

Cette partie intermédiaire 143 est en forme de U dont la base 144, et les deux branches 145, 146 ont sensiblement la même épaisseur, l'une, 145 ,des branches étant plus longue que l'autre et destinée à pénétrer dans la partie plus longue de la branche 126 de la première gravure du premier support 101 et qui, comme on peut le voir sur cette figure, comporte deux butées 147, 148 faisant chacune face à l'un des côté de la partie plus longue 149 de la branche 145 de la poutre d'entraînement.

La fonction de ces excroissances est de limiter le déplacement de la poutre d'entraînement en direction de la première partie du support, d'une valeur calibrée et correspondant sensiblement à la valeur d'un pas et demi des dents 112 de la première roue dentée 106. Ces excroissances constituent ainsi des moyens de limitation de course des dents 110 des poutres d'entraînement 107, ou, en d'autres termes, des butées.

On constate par ailleurs que l'épaisseur de la poutre d'entraînement au delà de cette partie intermédiaire est d'abord équivalente à celle de cette partie puis plus faible jusqu'à son extrémité comportant la dent d'entraînement 110, cette faible épaisseur étant apte à lui assurer une élasticité suffisante pour permettre l'entraînement de la roue dentée 106 par la dent d'entraînement 110 dans un sens aller et l'escamotage de cette dent 110 d'entraînement sur celles, 112, de la première roue dentée 106 dans le sens retour.

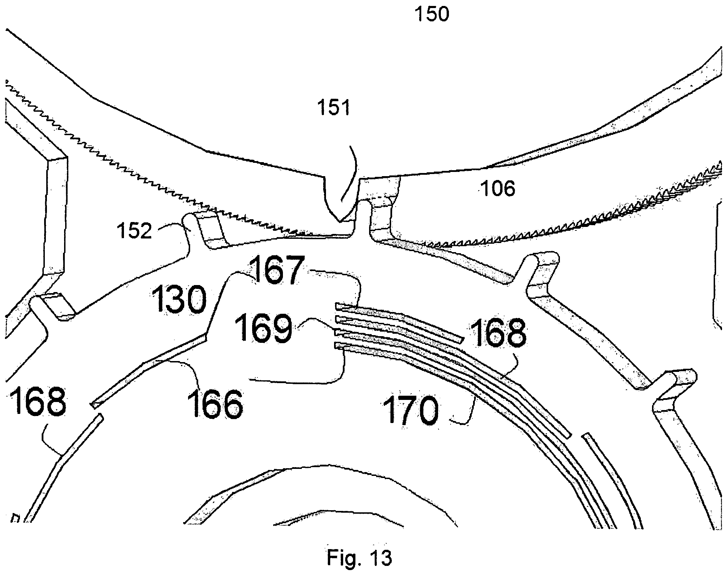

Comme montré sur les figures 9 et 13, une troisième roue dentée de comptage 150 de diamètre plus faible que la première roue dentée 106 est fixée sur cette dernière, ces deux roues ayant le même axe de rotation.

Comme montré sur la figure 9, ledit axe Y1 passe par les axes de rotation des première, seconde et troisième roues de comptage ainsi que par les axes des alésages des premières zones d'ancrage. Cet axe Y1 est perpendiculaire à la direction X des déformations de la structure aptes à être détectées par le microcapteur sur laquelle il est fixé.

Cette troisième roue dentée de comptage 150 comporte une seule dent 151 en forme d'arche gothique apte à constituer un engrenage avec celles 152, en forme d'arche romane, de la seconde roue de comptage 130, ces deux roues 130, 150 ayant la même épaisseur et étant disposées dans un même plan. Cette troisième roue dentée 150 est disposée dans la quatrième gravure 123 de la première partie 102 du support 101 et comporte un alésage de diamètre sensiblement égale à l'axe 155 émergeant de la quatrième gravure. La longueur des dents 152 et 151 des seconde et troisième roues dentées 130 et 150 est telle que lorsque la dent 51 de la troisième roue dentée 150 entre en contact avec une dent 152 de la seconde roue dentée 130, ce contact perdure sur une longueur sensiblement égale au pas des dents 152 de la seconde roue dentée 130.

Des moyens de lecture optiques de type lecteur de codes barres sont associés aux moyens de comptage afin de faciliter la lecture.

Comme montré sur la figure 13, des gorges 166 en arc de cercles parallèles en l'occurrence quatre au maximum sont associées aux dents 152 de la seconde roue dentée 130 et permettent de les numéroter de façon binaire, la dent numérotée 1 ne comportant aucune gorge associée, la dent numéro 2 ayant une gorge au niveau d'une première ligne 167, la dent numéro 3 ayant une gorge au niveau de la deuxième ligne 168, la dent n°4 ayant une gorge au niveau de chacune des deux premières lignes 167 et 168 etc... et ce, jusqu'à la 16ème dent à laquelle correspond une gorge au niveau de chacune des quatre lignes 167 à 170.

Comme montré sur la figure simplifiée 14, ne comportant qu'une seule poutre d'entraînement et ne présentant qu'une infime partie de la première roue dentée 106 dans laquelle les dents ont été considérées comme étant disposées dans un même plan, des gorges parallèles en l'occurrence neuf au maximum sont associées aux 512 dents de la première roue dentée 106 et permettent de les numéroter de façon binaire, la dent numérotée 1 ne comportant aucune gorge associée, la dent numéro 2 ayant une gorge au niveau d'une première ligne 156, la dent numéro 3 ayant une gorge au niveau de la deuxième ligne 157, la dent n°4 ayant une gorge au niveau de chacune des deux premières lignes 156 et 157 etc... et ce, jusqu'à la 512ème dent qui a une gorge au niveau de chacune des neuf lignes 156 à 164.

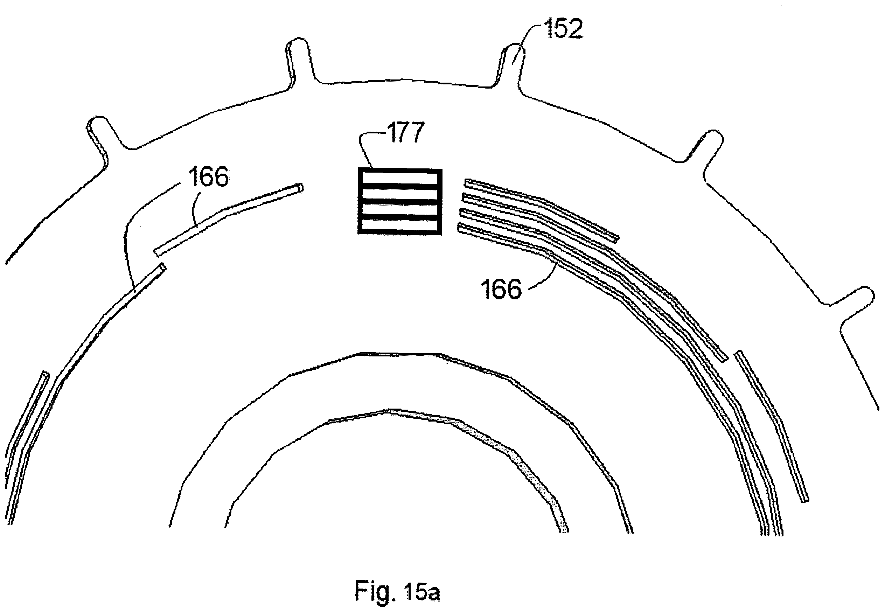

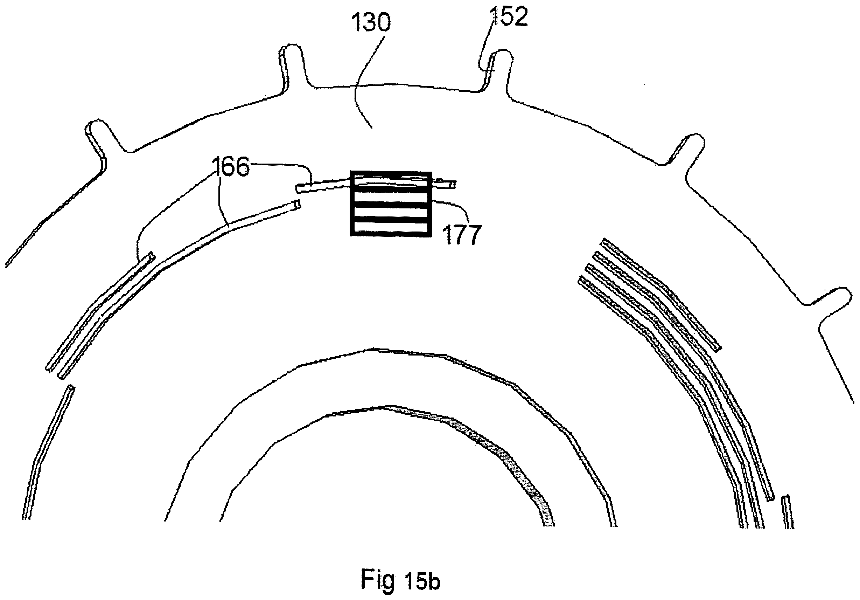

Pour effectuer la lecture du nombre de passages de véhicule entre un temps t0 et un temps t1, on effectue une lecture optique de la numérotation des dents sur chacune des première et seconde roues dentées 106 et 130 à l'instant to puis à l'instant t1, le lecteur ayant la même position à ces deux instants. L'image de la première lecture au temps t0 est celle de référence qui permet de déterminer quelle dent était engagée au moment de l'installation du dispositif. La deuxième image sert à identifier la dent engagée au moment t1, choisi par l'opérateur. L'identification de la dent engagée peut se faire de manière automatisée en important les deux images dans un logiciel de traitement d'images en générant un masque 177 délimitant les zones de lecture comme montré sur les figures 15a et 15b. Chaque zone de lecture sera soit noire s'il y a présence d'une gorge et équivalente à 1, soit blanche s'il n'y a pas de gorge et alors équivalente à 0, ce qui permet de calculer le nombre binaire associé à la dent. Dans l'exemple proposé, on lit le nombre 0000 sur la figure 15a associée à la seconde roue dentée, correspondant à 0 en base 10 et on lit 0001 sur la figure 15b, correspondant à $1x2^0 + 0x2^1 + 0x2^2 + 0x2^3 = 1$ en base décimale. Cela signifie que la structure a subi (1 - 0) x 512 événements, auxquels il convient de rajouter ceux comptabilisés sur la première roue dentée et qui sont déterminés de la même manière.

Tous les éléments de ce microcapteur sont réalisés en silicium ce qui lui permet de fonctionner correctement qu'elle que soit sa température de fonctionnement puisque les dilatations ou les constrictions qui en résultent seront les mêmes dans toutes les direction pour tous les composants.

Le fonctionnement du dispositif décrit précédemment est le suivant :

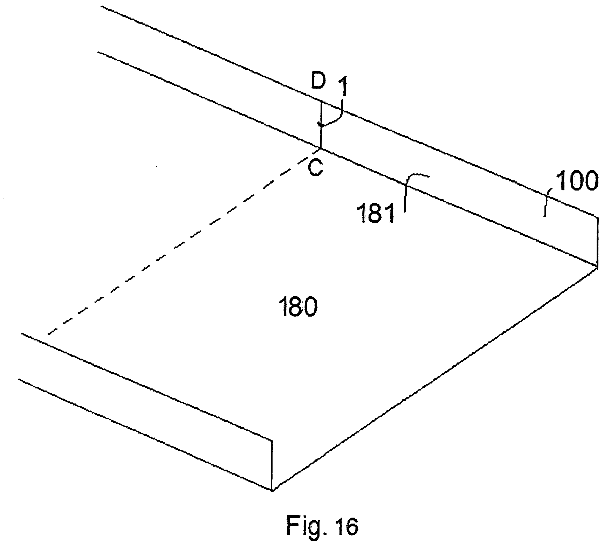

Il est tout d'abord fixé, comme montré sur la figure 16, par exemple avec de la colle et par ses surfaces planes 133 et 134 des premières et secondes parties du support 101 sur le parapet 181 d'un pont 100 comportant une chaussée 180 sur laquelle circule des véhicules.

Ce microcapteur est positionné sur le parapet de part et d'autre d'une droite virtuelle CD verticale. Pour une position donnée du capteur sur le parapet, le microcapteur ne comptera le passage du véhicule en fonction d'une valeur seuil correspondant à la masse du véhicule. Il sera ainsi par exemple possible de détecter, avec trois capteurs identiques mais disposés à des endroits différents du parapet, le nombre de véhicule passant d'une masse supérieure à 500kg pour l'un, le nombre de véhicule de plus de 3500kg pour le second et tous les véhicules de plus de 10000kg pour l'autre.

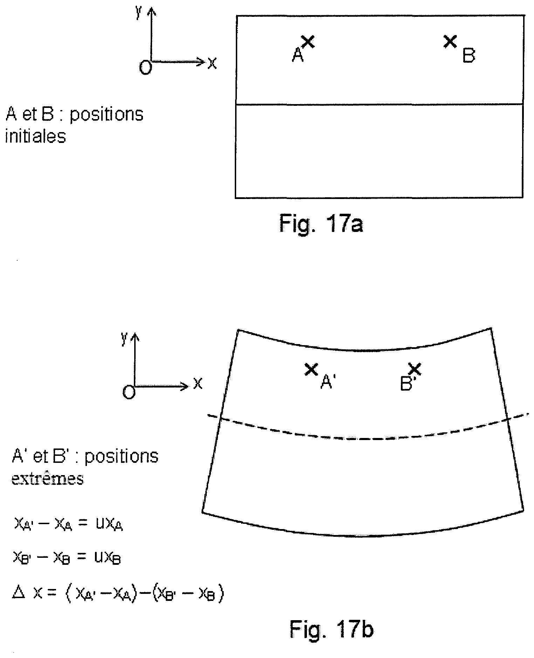

Comme montré sur les figures 17a et 17b , lorsqu'un véhicule passe sur la chaussée 180 à la droite, matérialisée par des tirets, de la droite CD, le poids de celui-ci produit un fléchissement de la chaussée qui se répercute au niveau du parapet, ou les points A et B situé de part et d'autre de la droite CD se déplacent depuis leur position de repos (figure 17a) jusqu'aux positions extrêmes respectives A' et B' (figure 17b) avant de revenir à leur position initiale après que le véhicule soit passé. Donc, lorsque qu'un véhicule roule sur la chaussée à la droite d'un microcapteur selon l'invention, il produit, de par son poids, un fléchissement de la chaussée qui se répercute au niveau du parapet du pont qui lui est solidaire par un rapprochement des points A et B. Soient 0x et Oy deux axes orthogonaux, le déplacement du point A selon la direction Ox est $x_{A'}-x_A$ et celle du point B $x_{B'}-x_B$ tandis que les déplacements respectifs des points A et B selon la direction Oy sont $y_{A'}-y_A$ et $y_{B'}-y_B$.

Dans le cadre de l'exemple de réalisation précité, c'est la différence de déplacement des points A et B selon l'axe Ox, à savoir $\Delta x = (x_{A'}-x_A) - (x_{B'}-x_B)$ qui est mise en jeu pour actionner les moyens passifs de comptage, le point A se trouvant sur la première partie 102 du support 101 et la point B se trouvant sur la seconde partie 103 du support 101. Ainsi, $\Delta x$ est supérieur au pas des dents 112 de la première roue dentée 106 et préférablement inférieur à 2 fois ce pas. Dans tous les cas, les butées 147, 148 sont aptes à limiter le déplacement de la première partie du support 101 par rapport à le second partie d'une distance $\Delta x$, par rapport à leur position de repos, supérieure au pas des dents 112 de la première roue 106, mais inférieure à deux fois ce pas.

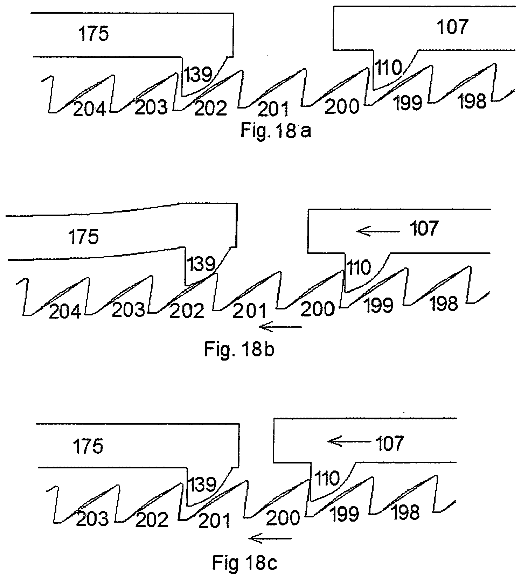

Les figures 18a à 18e montrent, de façon simplifiée puisqu'une seule poutre d'entraînement est représentée, l'évolution du positionnement de la dent d'entraînement 110 par rapport aux dents 112 de la première roue dentée 106 pour des instants successifs t0, t1, t2, t3 et t4, t0 et t4 correspondant à la position d'équilibre et t2, la position où le rapprochement entre les première et seconde parties 102, 103 du support 101 est maximal.

Sur la figure 18a, les première et seconde parties 102, 103 du support 101 sont en position de repos. La face radiale de la dent d'entraînement 110 ainsi que celle du dispositif anti-retour 113 sont chacune en regard d'une face radiale d'une dent, respectivement 200 et 203, de la première roue dentée 106, les faces en regard n'étant pas en contact.

Lorsqu'un véhicule commence à passer sur la chaussée 180 à la droite de la droite CD, les première et seconde parties 102, 103 du support 101 commencent à se rapprocher comme montré sur la figure 18b. La face radiale de la dent d'entraînement 110 entre en contact avec la face radiale de la dent 200 puis la pousse dans le sens de la flèche ce qui fait tourner la première roue dentée 106. Parallèlement, l'extrémité de la dent anti-retour du dispositif anti-retour 113 glisse, de part l'élasticité de la poutre 175 sur la surface inclinée de la dent 202 de la première roue 106, ce glissement se produisant jusqu'à ce que cette dent anti-retour passe au-delà de la surface inclinée et que sa surface radiale se retrouve, comme montré sur la figure 18c, en regard de la surface radiale de la dent 202.

A cet instant, soit naturellement, soit du fait des butées 147 et 148, ledit rapprochement s'arrête et l'on constate que la dent 200 de la roue dentée a pris la position initiale de la dent 201, la roue 106 ayant donc tourné d'une distance sensiblement égale à un pas des dents de cette roue 106.

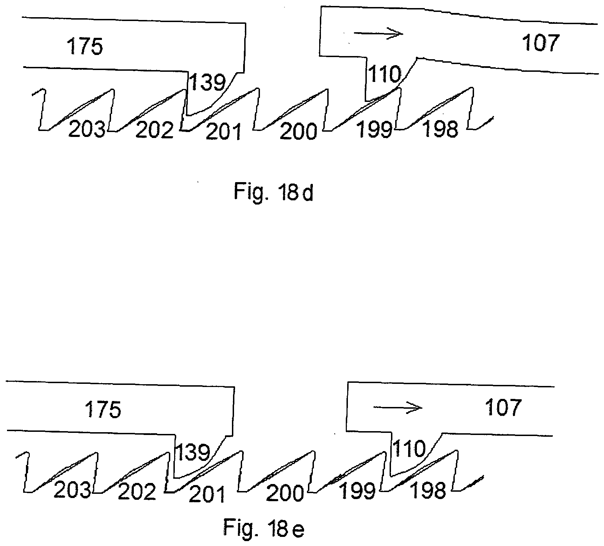

Lorsque le véhicule a dépassé la droite de la droite CD, les première et seconde parties 102, 103 du support 101 commencent à s'éloigner pour revenir à leur position de repos. La face inclinée de la dent d'entraînement va entrer en contact avec la face inclinée de la dent 199 et commencer à faire tourner la première roue dentée 106 dans le sens inverse à la flèche et ce jusqu'à ce que la face radiale de la dent anti-retour 139 entre en contact avec la face radiale de la dent 202. A cet instant le dispositif anti-retour va empêcher toute rotation supplémentaire de la première roue dentée 106 dans le sens opposé à celui de la flèche. Comme montré sur la figure 18d, l'extrémité de la dent d'entraînement 110 glisse, de part l'élasticité de la poutre 107 à ce niveau, sur la surface inclinée de la dent 199 de la première roue 106, ce glissement se produisant jusqu'à ce que cette dent d'entraînement passe au-delà de la surface inclinée et que sa surface radiale se retrouve, comme montré sur la figure 18e, en regard de la surface radiale de la dent 199.

A la fin de ce cycle, montré sur la figure 18e, les première et seconde parties 102, 103 du support ont repris leur position d'origine de la figure 18a et seule la première roue dentée 106 n'a pas sa position d'origine puisqu'elle a tourné de la valeur d'un pas de ses dents donc d'une dent, cette rotation permettant ainsi de compter chaque passage de véhicule sur la chaussée et à la droite de la droite CD.

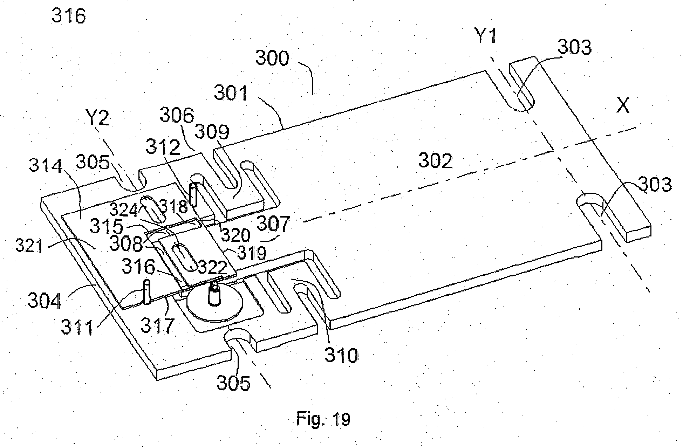

La figure 19 présente un exemple de réalisation d'un capteur destiné à être positionné sur la surface latérale du parapet d'un pont et apte à détecter et à compter le nombre de cycle de déformations du parapet d'un pont se traduisant par un cycle de variation de distance (éloignement puis rapprochement ou l'inverse) entre deux points A et B du parapet disposés préférentiellement horizontalement et à une distance inférieure à 3 cm l'un de l'autre, les variations de distance pouvant par exemple être comprise entre 15 et 100$\mu$m. Ce capteur 300 comporte un premier support 301 réalisé dans le même matériau que celui du parapet du pont, à savoir en aluminium, cette caractéristique permettant d'annuler l'effet des dilatations thermiques entre le parapet et le capteur. Ce support comporte une première partie 302 comportant des premières encoches transversales 303 d'axe Y1 perpendiculaire à son axe longitudinal X , une seconde partie 304 en forme de U comportant des secondes encoches transversales 305 d'axe Y2 perpendiculaire à l'axe longitudinal X, et une troisième partie 306 comportant d'une part une partie intermédiaire 307 solidaire de la première partie et séparée de la seconde partie par une gorge en U 308 et se poursuivant à l'intérieur de la forme en U de la seconde partie et d'autre part deux parties 309, 310 en forme de U disposés transversalement selon un axe Y3 perpendiculaire à l'axe longitudinal X du support 301. La fonction des deux parties 309, 310 en forme de U est de maintenir le positionnement de la première partie par rapport à la seconde partie avant et pendant la fixation du capteur sur la structure d'accueil à savoir le parapet du pont. Lorsque les première et seconde parties du support 301 sont fixées sur la structure d'accueil, même un endommagement des deux parties en U voir même leur suppression, n'empêche pas le fonctionnement du capteur.

Les première et seconde encoches sont destinées à recevoir de la colle afin de fixer le support 301 sur la structure d'accueil et d'obtenir ainsi des zones fixes de faible largeur et situées à des endroits prédéterminés et permettant un fonctionnement optimal du capteur.

Deux plots cylindriques 311, 312 sont chacun fixés dans un alésage pratiqué dans la deuxième partie du support. Leur fonction est de guider le positionnement d'une plaque 314, réalisée ici en silicium et de forme carrée. Cette plaque comporte une ouverture 315 en forme de L dont l'une de ses extrémités 316 débouche vers le milieu d'un premier côté 317 du carré tandis que son autre extrémité 318 se trouve au niveau du milieu d'un second côté 319 du carré adjacent audit premier côté 317 mais sans déboucher sur ce second côté de sorte qu'une fine largeur de matière 320 subsiste à ce niveau. Ainsi, cette plaque est constituée par une première et une seconde partie, respectivement 321 et 322, seconde partie dont la largeur est sensiblement égale à celle de la partie intermédiaire 307 de la troisième partie 306 et destinée à être fixée sur cette dernière.

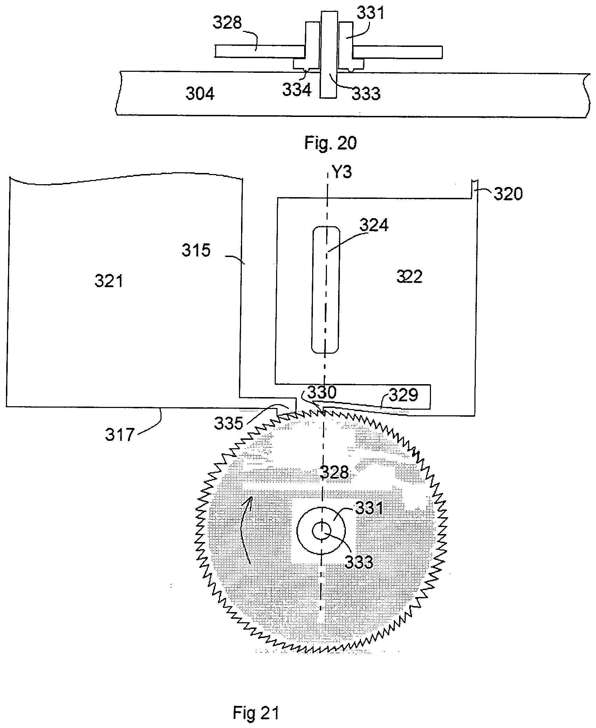

Chacune des première et seconde parties 321, 322 de la plaque comporte une ouverture 324 de forme oblongue disposée d'axe transversale confondu avec l'axe Y2 de fixation de la deuxième partie 304 du support 301 selon ledit axe Y2 comme montré sur la figure 21. Ces ouvertures sont destinées à recevoir de la colle afin de fixer la plaque 314 sur le support 301, et plus précisément la à fixer la partie première 321 de la plaque 314 sur la deuxième partie 304 du support 301 et la seconde partie 322 de la plaque 314 sur ladite partie intermédiaire 307 qui est solidaire de la première partie 302 du support 301, et d'obtenir ainsi des zones de fixation de faible largeur et situées à des endroits prédéterminés. Ainsi, lorsque la plaque 314 est positionnée puis collée sur le support 301, l'ouverture 315 en forme de L se trouve au dessus de ladite gorge en U 308 séparant ladite partie intermédiaire 307 de la seconde partie 304 du support 301. La partie 320 est détruite une fois la pièce 314 collée sur le support 301. Elle sert juste au maintien en position avant et pendant la phase de collage.

Comme montré sur la figure 20 qui présente les moyens de détection et de comptage selon cette variante de réalisation de l'invention, une poutre d'entraînement 329, qui comporte une dent 330 à sa première extrémité, a sa seconde extrémité qui est solidaire de la deuxième partie 322 de la plaque 314 au niveau dudit premier côté 317 du carré. Elle s'étend parallèlement au côté de cette deuxième partie 322 situé du côté dudit premier côté 317.

Comme montré sur la figure simplifiée 21 qui montre une seule poutre d'entraînement et présente les moyens de comptage selon cette variante de réalisation de l'invention, une roue dentée de comptage 328, semblable à celle de la figure 10, est montée sur un palier 331 de forme tubulaire et comportant un épaulement 332 sur lequel repose la roue dentée 328, ce palier 331 étant apte à tourner autour d'un axe de rotation 333 solidaire de la deuxième partie du support 301 et de sorte que la roue dentée 328 forme, avec la dent 330 de la poutre d'entraînement 329, un engrenage tandis que l'utilisation d'un patin de frottement complémentaire 335 permet d'obtenir un ensemble formant un cliquet, comme expliqué par exemple dans le cadre de la figure 4. Le palier 331 comporte des excroissances 334 sur sa base aptes à limiter les frottements avec le support 304 lors de ses rotations. D'une manière préférentielle, en position de repos, la dent 330 de la poutre d'entraînement 329 est en appui contre la roue dentée 328 et, ainsi, mise en précontrainte. Un tel capteur étant destiné à détecter et compter des déformations de la structure selon la direction X, la mise en précontrainte de la poutre d'entraînement 329 permet de compenser des déformations de la structure selon la direction Y2.

Avec un tel capteur, une déformation de la structure d'accueil dans la direction X produit une déformation similaire du support du capteur donc un éloignement (ou un rapprochement) des axes Y1 et Y2. Cet éloignement (ou ce rapprochement) produit un déplacement relatif de la première partie du support par rapport à la seconde partie et donc un déplacement de la dent 330 de la poutre d'entraînement 329 solidaire de la première partie 302 du support 301 par rapport à la roue dentée 328, ce déplacement produisant un entraînement de la roue dentée 328 dans le sens indiqué par la flèche. Lors du retour de la structure d'accueil dans sa position initiale, du fait de la présence du patin 335 et des formes des dents de la poutre d'entraînement 329 et de la roue dentée 328, la dent 330 de la poutre d'entraînement 329 escamote celle de la roue dentée, cette dernière restant ainsi dans la position prise à l'issue de la rotation dans le sens de la flèche, d'où l'analogie avec un cliquet.

Dans le cas où le matériau du support serait différent de celui de la structure d'accueil, la compensation de la température peut être effectuée en adaptant la longueur de la première partie du support et/ou de ladite partie intermédiaire de sorte que le produit de la distance séparant les deux axes de collage Y1 ,Y2 du capteur sur la structure d'accueil par le coefficient de dilatation du matériau constitutif de la structure d'accueil soit égal au produit de la distance séparant ledit axe Y1 de collage à la dent de la poutre d'entraînement par le coefficient de dilatation thermique du support du capteur.

Par ailleurs, en plaçant plusieurs capteurs identiques à des hauteurs différentes de la surface latérale du parapet, il est possible de discriminer les types de véhicule passant sur le pont en fonction de leur masse. A titre d'exemple, un premier capteur positionné le plus bas pourra compter le passage de tous les véhicules dont la masse est supérieure à 500kg, un second capteur placé dans une position intermédiaire pourra compter le passage de tous les véhicules de plus de 3 tonnes et un troisième capteur situé encore plus haut ne comptera le passage que des véhicules de plus de 10 tonnes.

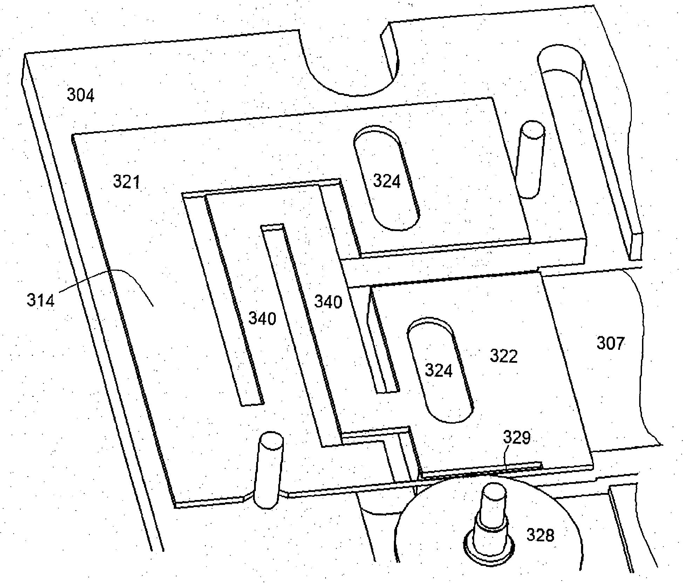

La figure 22 montre une seconde variante de réalisation de la plaque 314 dans laquelle les première et seconde parties 321, 322 sont solidarisées par un élément intermédiaire élastique 340 en forme de U, ladite fine largeur de matière 320 ayant aussi été supprimée. Cet élément intermédiaire 340 permet d'une part de maintenir le positionnement des dites première et seconde parties 321, 322 avant et pendant leur collage sur les parties respectives 304 et 307 tandis que son élasticité permet un déplacement relatif des dites première et seconde parties 321, 322 lorsque la structure sur laquelle est fixé le capteur est soumise à une sollicitation produisant une variation de distance entre les points A et B du capteur, ce déplacement produisant une rotation de la roue de comptage via la poutre d'entraînement 329.

Les modes de réalisation précédemment décrits présentent, par rapport à l'état de la technique, de nombreux avantages. Ainsi, le microcapteur est totalement passif, et c'est l'événement lui-même (action d'un objet apte à fléchir une structure) qui fournit l'énergie nécessaire à l'activation des fonctions de détection et de comptage.

Dans le cas présent, le microcapteur est mis en service pour une durée qui n'est pas limitée par la durée de vie de la source d'énergie. Compte tenu de la nature même des matériaux utilisés, en l'occurrence du silicium, l'espérance de vie du capteur est dans tous les cas très supérieure à celle de tous les systèmes d'arme y compris pour des systèmes passifs stockés pour de très longues périodes.

Dans le cas présent, le caractère inerte du compteur permet d'envisager de l'appliquer sur un système fonctionnant en sécurité pyrotechnique, ce qui procure une avancée considérable par rapport aux capacités actuelles. De plus, un microcapteur selon l'invention est totalement insensible aux champs électromagnétiques.

En outre, la solution proposée est très simple à mettre en oeuvre et son fonctionnement très fiable. Il est indépendant d'une source d'énergie, discret, et d'un coût unitaire faible.

Par ailleurs, lorsque les moyens de comptage comportent plusieurs poutres aptes à entraîner, successivement, la roue dentée selon une même direction, ces poutres peuvent être disposées du même côté de la roue dentée comme sur la figure 6 où, par exemple, en partie d'un côté et en partie de l'autre sans que le fonctionnement du dispositif n'en soit changé. De plus les dents des dites poutres peuvent être placées à la même distance les unes des autres ou à des distances différentes tout en respectant la formule de l'écartement E donnée dans la description.

En outre, la dent de la poutre anti-retour telle que montrée sur la figure 10 peut être remplacée par un patin de frottement apte à appliquer une force de frottement sur la roue dentée de comptage. Son rôle est double. Dans les deux cas, c'est la force de frottement du patin sur la roue qui lui permet de jouer son rôle. Cette force de frottement est déterminée par la précontrainte de la poutre patin. Il limite d'une part une rotation excessive due à des effets inertiels de la roue de comptage dans le sens normal de rotation. Il empêche d'autre part une rotation de la roue de comptage dans le sens inverse du sens normal lors du retour de la dent d'entraînement, pour peu que la force de frottement du patin soit supérieure à celle de la poutre d'entraînement sur la roue.

Par ailleurs, le mécanisme de subdivision peut notamment être appliqué à l'amélioration des performances d'un actionneur ou au captage d'une source d'énergie d'origine quelconque par exemple pour la récupération d'énergie perdue...

Le mécanisme d'entraînement par subdivision peut ainsi être étendu aux actionneurs mettant en jeu des oscillations mécaniques de faible amplitude ce qui est le cas des actionneurs MEMS notamment et des actionneurs électrostatiques en particulier.

Plus généralement, toute oscillation mécanique de très faible amplitude, quelle que soit son origine, par exemple mécanique, vibratoire ou thermique peut être transférée en mode pas à pas à une roue dentée dont le pas est supérieur à l'amplitude de l'oscillation.

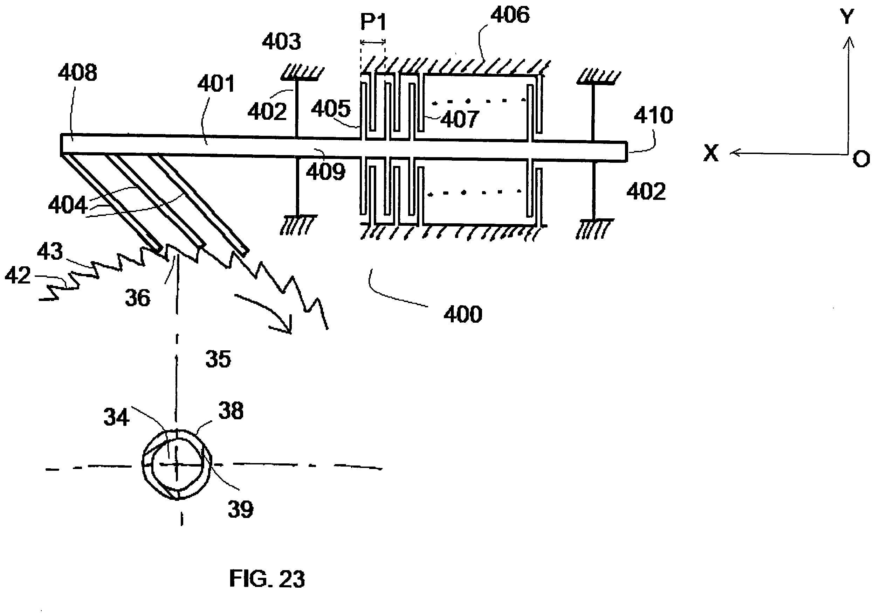

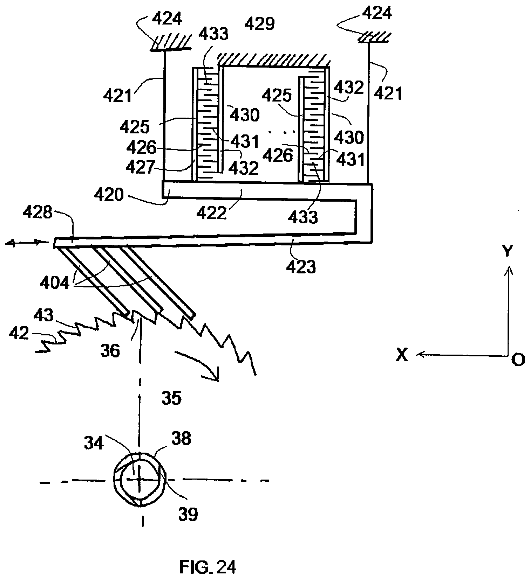

A titre d'exemple, les figures 23 et 24 montrent des dispositifs utilisant un actionneur électrostatique en amont du mécanisme d'entraînement par subdivision.

L'actionneur 400 présenté sur la figure 24 comporte :

- un ensemble mobile comprenant :

  - un premier support 401en forme d'axe 401 maintenu selon une direction OY par des suspensions élastiques disposées au niveau de sa partie médiane 409 et de l'une 410 de ses extrémités 408, 410 solidaires d'un troisième support 403,
  - des électrodes 405 de forme annulaire fixées à l'axe 410 disposées perpendiculairement à ce dernier et entre sa partie médiane 409 et son extrémité 410 et espacées d'un pas P1,
  - trois poutres fixées à l'autre extrémités 408 de l'axe et dirigées en direction des dents 36 d'une roue dentée 35 et de telle manière que l'extrémité libre de ces poutres soit chacune en contact avec une dent 36 et fasse avec la surface radiale 43 de cette dent 36 un angle préférablement aigu. Ces poutres sont décalées par rapport aux dents de la roue dentée de sorte à former un mécanisme de subdivision,

- un ensemble fixe comprenant :

  - un quatrième support tubulaire 406
  - des électrodes fixes 407 de forme annulaire et disposées perpendiculairement à l'axe du quatrième support 406, espacées d'un pas P1 et de sorte que leur diamètre interne soit supérieur à celui de l'axe 401 de l'ensemble mobile,

- une alimentation électrique non représentée connectée aux dites électrodes fixes et mobiles et des moyens de commande de cette alimentation.

Le fonctionnement de cet actionneur est le suivant :

Lorsque l'alimentation fournit de l'électricité l'ensemble mobile se déplace par rapport à l'ensemble fixe, en l'occurrence, il se rapproche de ce dernier d'une distance (Δ). Ce rapprochement produisant alors un mouvement relatif entre le premier et le second support qui est lui-même fixe. Lors de ce rapprochement, l'une des poutres, en contact avec une face radiale 453 d'une dent 36 entraîne la roue sur une distance équivalente à (Δ), cette distance étant inférieure au pas des dents de la roue dentée 35. Lorsque l'alimentation électrique est supprimée l'ensemble mobile reprend sa position initiale de par la présence des suspensions élastiques tandis que le moyen d'accommodation élastique constitué par la surface périphérique interne 38 de la roue dentée 35 et l'extrémité des dites lames 39 empêchent le retour de la roue dentée 35 dans sa position initiale.

La figure 24 montre une variante de réalisation de l'actionneur selon la figure 23 dans laquelle :

- un ensemble mobile comprend :

  - un premier support mobile 420 en forme de U est maintenu en suspension selon une direction OY par des suspensions élastiques 421 disposées aux extrémités de l'une 422 des branches 422, 423 du U et chacune étant fixée à un troisième support 424.
  - Deux ensembles 425 d'électrodes 426 en forme de plaques régulièrement espacées et disposées perpendiculairement à une plaque 427 elle même fixée perpendiculairement à ladite branche 422 du U.
  - trois poutres 404 fixées à une extrémité 428 de l'autre branche 423 et dirigées en direction des dents 36 d'une roue dentée 35 et de telle manière que l'extrémité libre de ces poutres soit chacune en contact avec une dent 36 et fasse avec la surface radiale 43 de cette dent 36 un angle préférablement aigu. Ces poutres sont décalées par rapport aux dents de la roue dentée de sorte à former un mécanisme de subdivision tandis que la roue dentée est positionnée autour d'un axe 34 solidaire d'un second support 33.

- un ensemble fixe comprenant :

  - un quatrième support fixe 429 sur lequel sont fixés deux ensembles 430 d'électrodes 431 en forme de plaques régulièrement espacées et disposées perpendiculairement à une plaque 432 elle même fixée perpendiculairement audit quatrième support 429. Les deux ensembles 425 d'électrodes 426 de l'ensemble mobile et les deux ensembles 430 d'électrodes 431 de l'ensemble fixe forment deux ensembles 433 d'électrodes interdigitées.

- une alimentation électrique non représentée connectée aux dites électrodes fixes et mobiles et des moyens de commande de cette alimentation.

Le fonctionnement de cet actionneur est similaire à celui de la figure 23.

Dans les deux variantes de réalisation présentées aux figures 23 et 24, l'amplitude de l'oscillation de l'actionneur (Δ) est inférieur au pas de la roue dentée (P).

Le mouvement pas à pas de la roue dentée se fait par incréments de valeur Δ inférieurs, voire largement inférieurs selon la valeur du "facteur de subdivision" au pas de la roue dentée.

Dans ce contexte, le mécanisme de subdivision confère les avantages suivants :

- En premier lieu, la subdivision de pas permet d'atteindre une résolution de positionnement exceptionnelle. En effet, la résolution de positionnement n'est limitée que par l'amplitude de l'oscillateur et se trouve décoréllée de la valeur du pas de la roue dentée, et donc, d'une manière générale, de la définition des motifs mécaniques réalisables avec les technologies de l'état de l'art.
- Le mécanisme de subdivision permet d'exploiter des amplitudes de très faible amplitude (par exemple des vibrations mécaniques, des dilatations thermiques de très faible amplitude...).
- Puisque des amplitudes très faibles deviennent exploitables, il devient possible, dans les cas des actionneurs électrostatiques MEMS, d'utiliser des entrefers de très faible valeur (typiquement de l'ordre du micron).

- Puisque les entrefers deviennent exploitables jusqu'à des valeurs aussi basses que le micron, il est alors possible d'utiliser, notamment, des actionneurs électrostatiques dits à électrode normales ou à plaques parallèles. L'intérêt de ces actionneurs est qu'ils mettent en jeu une pression électrostatique d'autant plus intense que l'entrefer est réduit.
- Il en résulte que les forces utiles communiquées à la roue dentée sont d'autant plus intenses que l'entrefer est réduit.
- Il en résulte également que la puissance mécanique utile du dispositif atteint des niveaux sans comparaison avec les valeurs de l'état de l'art dans le domaine des technologies MEMS.

Le mécanisme de subdivision permet donc, dans le cas particulier des actionneurs électrostatiques MEMS, d'utiliser des actionneurs à interaction de champs électriques à plaques parallèles en mode pas à pas et sans limitation de course utile.

Actuellement, seul le principe de subdivision de pas permet d'exploiter des oscillations d'aussi faible amplitude.

Ainsi, le mécanisme de subdivision peut être appliqué à la banalisation des technologies utilisées pour la fabrication de la roue dentée faisant office d'interface entre l'actionneur et le produit d'accueil...

Les variantes de réalisation précédemment décrites avaient pour objet de réduire à son strict minimum l'amplitude captée, notamment dans le cas d'un actionneur électrostatique, afin d'en améliorer les performances en termes de force, couple ou puissance mécanique utile.

Par ailleurs, le mécanisme de subdivision peut également être exploité dans le cadre d'une approche duale diamétralement opposée à celle décrite précédemment.

Ainsi, plutôt que d'améliorer les performances d'un actionneur en réduisant, par exemple, son entrefer, on peut conserver un entrefer classique, typiquement 10 microns ou quelques dizaines de microns, mais on utilise une roue dentée présentant un pas supérieur à l'amplitude captée.

Fondamentalement, l'invention est strictement la même que celle décrite précédemment, mais celle-ci diffère sensiblement, en pratique, pour la raison suivante:

Lorsque l'on utilise un actionneur MEMS électrostatique, il est extrêmement difficile de mettre en oeuvre des amplitudes supérieures à quelques dizaines de microns, typiquement 30 microns. Sans subdivision, le pas de la roue dentée doit donc correspondre approximativement à la même valeur (i.e. 30 microns dans le cas présent). Or 30 microns est une limite haute pour l'amplitude de l'actionneur et une limite basse pour la structuration du pas de la roue dentée.

Le mécanisme de subdivision peut donc être utilisé pour dilater le pas de la roue dentée en maintenant l'amplitude de l'actionneur à une valeur standard. Par exemple, avec un facteur de subdivision de 5 et une amplitude de 30 microns, on obtient un pas de roue de 150 microns, aisément réalisable au moyen de technologies conventionnelles à bas coût (injection plastique, taillage...).

La capacité à augmenter le pas de la roue dentée ou crémaillère peut donc permettre de baisser considérablement le coût de production de la roue dentée qui fait office d'interface entre l'actionneur MEMS et le produit d'accueil (exemple: la montre à quartz...).

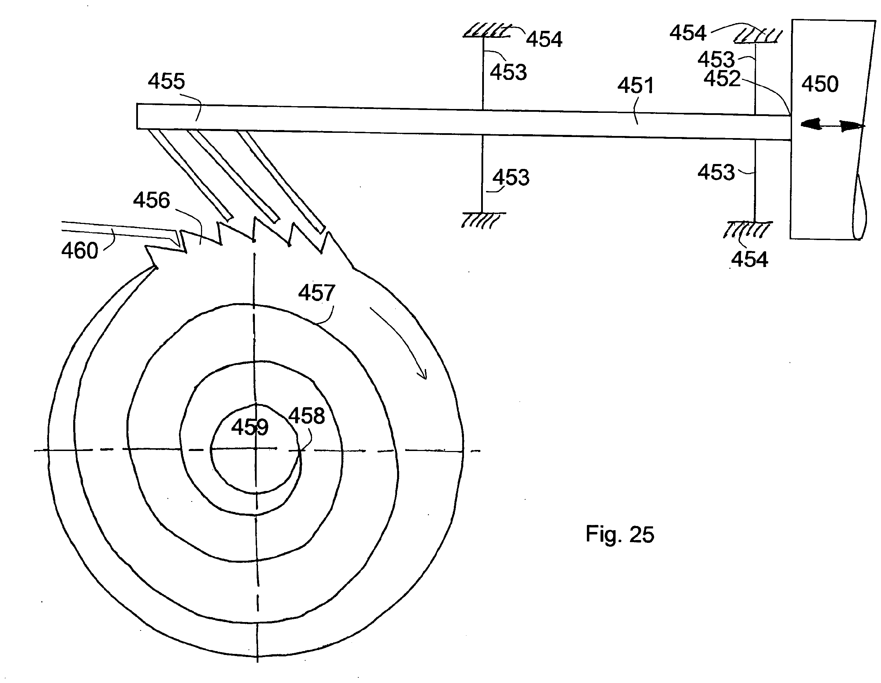

La figure 25 montre une autre application d'un dispositif selon l'invention en vue de récupérer de l'énergie générée par des oscillations de très faible amplitude d'un matériel 450.

Ce dispositif comporte un premier support longitudinal 451, fixé à l'une, 452, de ses extrémités 452, 455, au matériel 450 et maintenu selon une direction OY par des suspensions élastiques 453 disposées au niveau de sa partie médiane 454 et de son extrémités 452 et solidaires d'un troisième support 454. Trois poutres 404 sont fixées au niveau de la seconde extrémité 455 du premier support longitudinal 451 et dirigées en direction des dents 456 d'un ressort à barillet 457 dont l'extrémité centrale 458 est fixée sur un axe 459 lui-même solidaire d'un deuxième support 461. En outre, un dispositif anti-retour 460 à dent, tel par exemple celui de la figure 4, est associé à la denture de ressort à barillet.

En fonctionnement tout mouvement du matériel, 450 selon la direction OX produit un déplacement entre le premier support 451 et donc des poutres selon cette même direction et produit alors un mouvement relatif entre le premier et le second support. L'une de ces poutres entraîne alors la dent contre laquelle elle repose dans la direction indiquée tandis que lorsque le matériel revient dans sa position d'origine, le premier support et, par voie de conséquence, les poutres associées reviennent dans leur position d'origine tandis que dispositif anti-retour maintient le ressort à barillet dans sa nouvelle position.

L'énergie accumulée ainsi par le ressort à barillet suite à de multiples oscillations du matériel 450 peut ensuite être utilisée par exemple pour entraîner un second matériel.

**Revendications**

1. Dispositif de transmission, à un premier élément mobile (35) comportant des dents (36), d'un mouvement relatif entre un second et un troisième éléments (32, 33) d'un système aptes à se déplacer ou à être déplacés l'un par rapport à l'autre sous l'effet d'une contrainte, le premier élément mobile (35) étant disposé sur l'un desdits second et troisième éléments (32, 33), ce dispositif comportant plusieurs poutres d'entraînement (40) aptes à entraîner successivement le premier élément mobile (35) et étant, d'une part, solidaire de l'autre desdits second et troisième éléments (32, 33) et, d'autre part, comportant chacune une dent à l'une de leurs extrémités aptes à constituer un engrenage avec une dent dudit premier élément mobile (35), dispositif **caractérisé en ce que** ces plusieurs poutres d'entrainement (40) sont solidaires de l'autre desdits second et troisième éléments (32, 33) de sorte à se déplacer conjointement avec ce dernier et dans la même direction par rapport aux dents (36) de l'élément mobile, le dispositif comportant m poutres d'entraînement comportant, éventuellement, chacune une dent à son extrémité libre et l'écartement E entre deux extrémités libres ou, le cas échéant, entre deux dents de deux dents successives est égale à :

$$E = l_1 . P + l_2 . P / m$$

avec

m est le nombre de poutre, P est le pas des dents (36) du premier élément mobile,
$l_1$ et $l_2$ sont des nombres entiers naturels et :

$l_2 \neq 0$ et $l_1 \neq 0$ si $l_2 \leq m$
$l_2 \neq m$ et $l_2 \neq k.m$ avec k entier naturel supérieur à 1.

2. Dispositif selon la revendication 1, **caractérisé en ce que** l'élément mobile (35) comporte une roue dentée.

3. Dispositif selon la revendication 2, **caractérisé en ce qu'**au moins l'une des poutres d'entraînement (40) comporte une dent (41) à l'une de ses extrémités, cette dent constituant un engrenage avec celle de la roue dentée (35).

4. Dispositif selon la revendication 1, **caractérisé en ce que** l'élément mobile comporte une crémaillère.

5. Dispositif selon la revendication 1, **caractérisé en ce que** l'élément mobile comporte un ressort à barillet.

6. Dispositif selon l'une quelconque des revendications 1 à 5, **caractérisé en ce que** lesdits second et troisième éléments sont constitués par les premières et secondes parties d'un support.

7. Dispositif selon l'une quelconque des revendications 1 à 5, **caractérisé en ce que** lesdits second et troisième éléments consistent en un premier et un second support.

8. Dispositif selon l'une quelconque des revendications 1 à 7, **caractérisé en ce qu'**un dispositif anti-retour est associé au premier élément mobile.

9. Utilisation d'un dispositif selon l'une quelconque des revendications 1 à 8 dans un capteur passif et réversible de cycles de températures ou de contraintes mécaniques subis par une structure, ce capteur comportant des moyens de détection et de comptage.

10. Utilisation d'un dispositif selon l'une quelconque des revendications 1 à 8 dans un actionneur électrique.

11. Utilisation d'un dispositif selon l'une quelconque des revendications 1 à 8 dans un dispositif récupérateur d'énergie apte à être fixé sur un matériel lui-même apte à osciller.

**Patentansprüche**

1. Vorrichtung zum Übertragen, an ein erstes bewegliches Element (35), das Zähne (36) aufweist, einer relativen Bewegung zwischen einem zweiten und einem dritten Element (32, 33) eines Systems, die imstande sind, sich im Verhältnis zueinander unter der Wirkung einer Beanspruchung zu verlagern oder verlagert zu werden, wobei das erste bewegliche Element (35) auf einem von dem zweiten und dritten Element (32, 33) angeordnet ist, wobei diese Vorrichtung mehrere Antriebsbalken (40) aufweist, die imstande sind, nacheinander das erste bewegliche Element (35) anzutreiben und zum einem mit dem anderen von dem zweiten und dritten Element (32, 33) fest verbunden sind und zum anderen jeweils einen Zahn an einem ihrer Enden aufweisen, die imstande sind, einen Eingriff mit einem Zahn des ersten beweglichen Elements (35) zu bilden, wobei die Vorrichtung **dadurch gekennzeichnet ist, dass** diese mehreren Antriebsbalken (40) mit dem anderen von dem zweiten und dritten Element (32, 33) derart fest verbunden sind, dass sie sich gemeinsam mit diesem und in derselben Richtung in Bezug auf die Zähne (36) des beweglichen Elements verlagern, wobei die Vorrichtung m Antriebsbalken aufweist, die eventuell jeweils einen Zahn an ihrem freien Ende aufweisen und die Beabstandung E zwischen zwei freien Enden oder gegebenenfalls zwischen zwei Zähnen von zwei aufeinanderfolgenden Zähnen entspricht:

$$E = I_1 . P + I_2 . P / m$$

wobei

m die Anzahl der Balken ist, P die Teilung der Zähne (36) des ersten beweglichen Elements ist,
$I_1$ und $I_2$ natürliche Ganzzahlen sind, und:
$I_2 \neq 0$ und $I_1 \neq 0$ wenn $I_2 \leq m$
$I_2 \neq m$ und $I_2 \neq k.m$ mit k als natürliche Ganzzahl größer als 1.

2. Vorrichtung nach Anspruch 1, **dadurch gekennzeichnet, dass** das bewegliche Element (35) ein Zahnrad aufweist.

3. Vorrichtung nach Anspruch 2, **dadurch gekennzeichnet, dass** mindestens einer der Antriebsbalken (40) einen Zahn (41) en einem seiner Enden aufweist, wobei dieser Zahn einen Eingriff mit dem des Zahnrads (35) bildet.

4. Vorrichtung nach Anspruch 1, **dadurch gekennzeichnet, dass** das bewegliche Element eine Zahnstange aufweist.

5. Vorrichtung nach Anspruch 1, **dadurch gekennzeichnet, dass** das bewegliche Element eine Federhausfeder aufweist.

6. Vorrichtung nach einem der Ansprüche 1 bis 5, **dadurch gekennzeichnet, dass** das zweite und dritte Element von den ersten und zweiten Teilen einer Stütze gebildet sind.

7. Vorrichtung nach einem der Ansprüche 1 bis 5, **dadurch gekennzeichnet, dass** das zweite und dritte Element aus einer ersten und einer zweiten Stütze bestehen.

8. Vorrichtung nach einem der Ansprüche 1 bis 7, **dadurch gekennzeichnet, dass** dem ersten beweglichen Element eine Rücklaufsperrvorrichtung zugeordnet ist.

9. Verwendung einer Vorrichtung nach einem der Ansprüche 1 in 8 einem passiven und reversiblen Sensor von Temperatur- oder mechanischen Beanspruchungszyklen, denen eine Struktur unterliegt, wobei dieser Sensor Detektions- und Zählmittel aufweist.

10. Verwendung einer Vorrichtung nach einem der Ansprüche 1 bis 8 in einem elektrischen Aktuator.

11. Verwendung einer Vorrichtung nach einem der Ansprüche 1 bis 8 in einer Energierückgewinnungsvorrichtung, die imstande ist, auf einem Material befestigt zu sein, das selbst imstande ist, zu schwingen.

**Claims**

1. A device for transmitting, to a first movable member (35) comprising teeth (36), a relative movement between second and third members (32, 33) of a system that are able to move or be moved with respect to each other under the action of a stress, the first movable member (35) being arranged on one of said second and third members (32, 33), this device comprising several driving beams (40) able to successively drive the first movable member (35) and being, on one hand, integral with the other of said second and third members (32, 33) and, on the other hand, each comprising a tooth at one of the ends thereof that are able to constitute a gear with a tooth of said first movable member (35), the device being **characterised in that** these several driving beams (40) are integral with the other of said second and third members (32, 33) in order to move together with the latter and in the same direction with respect to the teeth (36) of the movable member, the device comprising m driving beams each comprising, optionally, a tooth at its free end and the spacing E between two free ends or, when appropriate, between two teeth of two successive teeth, is equal to:

$$E = I_1 \cdot P + I_2 \cdot P / m$$

in which

m is the number of beams, P is the pitch of the teeth (36) of the first movable member,
$I_1$ and $I_2$ are natural integers, and:
$I_2 \neq 0$ and $I_1 \neq 0$ if $I_2 \leq m$
$I_2 \neq m$ and $I_2 \neq k.m$ with k being a natural integer higher than 1.

2. The device according to claim 1, **characterised in that** the movable member (35) comprises a toothed wheel.

3. The device according to claim 2, **characterised in that** at least one of the driving beams (40) comprises a tooth (41) at one of the ends thereof, this tooth constituting a gear with that of the toothed wheel (35).

4. The device according to claim 1, **characterised in that** the movable member comprises a rack.

5. The device according to claim 1, **characterised in that** the movable member comprises a barrel spring.

6. The device according to any of claims 1-5, **characterised in that** said second and third members are constituted by the first and second parts of a carrier.

7. The device according to any of claims 1-5, **characterised in that** said second and third members consist in first and second carriers.

8. The device according to any of claims 1-7, **characterised in that** a non-return device is associated with the first movable member.

9. Use of a device according to any of claims 1-8 in a passive and reversible sensor of temperature cycles or mechanical stresses experienced by a structure, this sensor comprising detecting and counting means.

10. Use of a device according to any of claims 1-8 in an electric actuator.

11. Use of a device according to any of claims 1-8 in a power recovery device able to be attached on a material itself able to oscillate.

Fig.1

Fig.2

Fig.3

Fig.4

A et B : positions
initiales

Fig. 5a

A' et B' : positions
extrêmes

$X_{A'} - X_A = UX_A$

$X_{B'} - X_B = UX_B$

$\Delta X = (X_{A'} - X_A) - (X_{B'} - X_B)$

$\Delta Y = 0$

Fig. 5b

Fig.6

Capteur d'événements sans source d'énergie

Fig. 7

Fig. 8

Fig. 9

EP 1 998 144 B1

Fig. 10

Fig. 11

Fig. 12

Fig. 13

EP 1 998 144 B1

Fig. 14

EP 1 998 144 B1

Fig. 15a

EP 1 998 144 B1

Fig 15b

EP 1 998 144 B1

Fig. 16

A et B : positions
initiales

Fig. 17a

A' et B' : positions
extrêmes

$$x_{A'} - x_A = ux_A$$

$$x_{B'} - x_B = ux_B$$

$$\Delta x = (x_{A'} - x_A) - (x_{B'} - x_B)$$

Fig. 17b

175

107

139

204  203  202  201  200  199  198

110

Fig. 18 a

175

107

139

204  203  202  201  200  199  198

110

Fig. 18 b

175

107

139

203  202  201  200  199  198

110

Fig 18 c

175　139　107　110　203　202　201　200　199　198

Fig. 18 d

175　139　107　110　203　202　201　200　199　198

Fig. 18 e

Fig. 19

Fig. 20

Fig 21

**FIG. 23**

EP 1 998 144 B1

FIG. 24

Fig. 25

EP 1 998 144 B1

**RÉFÉRENCES CITÉES DANS LA DESCRIPTION**

**Documents brevets cités dans la description**

- CH 497725
- FR 2893139
- FR 0703754